# EUROPEAN PATENT APPLICATION

(11) **EP 4 715 550 A1**
(43) Date of publication of application: **25.03.2026**
(21) Application number: 25724595.1
(22) Date of filing: 08.05.2025
(51) Int. Cl.: G06F 3/0484, G06F 3/04815, G06F 3/01, G06F 3/00, G06V 40/16

(54) **FACE-MOUNTED ELECTRONIC DEVICE AND METHOD FOR TRANSMITTING VISUAL OBJECT CORRESPONDING TO USER OF FACE-MOUNTED ELECTRONIC DEVICE**

(30) Priority: 30.07.2024 KR 20240100952; 31.10.2024 KR 20240152350
(71) Applicant: Samsung Electronics Co., Ltd., Suwon-si, Gyeonggi-do 16677 (KR)
(72) Inventor: SON, Dongil, Suwon-si, Gyeonggi-do 16677 (KR); KIM, Kwangtai, Suwon-si, Gyeonggi-do 16677 (KR); KIM, Seungnyun, Suwon-si, Gyeonggi-do 16677 (KR); KIM, Jihyun, Suwon-si, Gyeonggi-do 16677 (KR); YEOM, Donghyun, Suwon-si, Gyeonggi-do 16677 (KR); CHOI, Bokun, Suwon-si, Gyeonggi-do 16677 (KR)
(74) Representative: Appleyard Lees IP LLP
(86) International application number: PCT/KR2025/006203
(87) International publication number: WO 2026/029327

(57) **Abstract**

According to an embodiment, a face-mounted electronic device may include a communication circuit. The electronic device may include a first camera for acquiring an image including at least a part of a user's face. The electronic device may include a second camera for acquiring a surrounding environment image thereof. The electronic device may include a memory storing at least one computer program including instructions. The electronic device may include at least one processor. The instructions, when executed individually or collectively by the at least one processor, may cause the electronic device to initiate a communication connection for transmitting a voice and/or image to an external electronic device using a communication circuit. The instructions may cause the electronic device to create an avatar corresponding to the user based on an image including at least a part of the user's face and/or a changed surrounding environment image according to movement of the electronic device. The instructions may cause the electronic device to transmit the avatar to the external electronic device. The instructions may cause the electronic device to identify an amount of movement based on a first image, which is a surrounding environment image at a time point that initiates the communication connection, and a changed surrounding environment image according to movement of the electronic device. The instructions may cause the electronic device to identify whether an amount of movement of the electronic device exceeds a predetermined first value. The instructions may cause the electronic device to stop avatar transmission in response to an amount of movement of the electronic device exceeding the predetermined first value.

## Description

### [Technical Field]

The disclosure relates to a face-mounted electronic device and a method of operating the face-mounted electronic device, and to a face-mounted electronic device and technology for transmitting a visual object corresponding to a user of the face-mounted electronic device.

### [Background Art]

A face-mounted electronic device in the form of a head mounted display (HDM) is a device worn on a user's head and includes a display that provides images to the user. The face-mounted electronic device may provide images in the form of augmented reality (AR), virtual reality (VR), or mixed reality (MR) to the user.

The face-mounted electronic device may provide a video call function to the user by transmitting or receiving an image to or from an external electronic device based on a communication connection. In a process of performing a video call, the face-mounted electronic device may use an image of the user captured by a camera or an avatar, which is a virtual graphic object corresponding to the user.

### [Disclosure of Invention]

### [Technical Problem]

The electronic device may perform a communication connection with an external electronic device using a communication circuit and perform a video call. In the case of performing a video call, the electronic device may create and/or display an avatar corresponding to a user thereof. The electronic device may determine characteristics (e.g., a size of the avatar, a position of the avatar) of the avatar being displayed based on the movement thereof corresponding to the movement of the user wearing the same.

The user of the electronic device may move in a state of wearing the electronic device while performing a video call. The electronic device may transmit an avatar to an external electronic device even in a situation in which the user leaves a position where communication connection was made and determine characteristics (e.g., a size of the avatar, a position of the avatar, an angle of the avatar) of the avatar being displayed based on the position thereof at a time point of communication connection. In the case that the position of the electronic device at the time point of communication connection is maintained as the criterion for determining characteristics of the avatar being displayed, an unintended avatar may be displayed on the external electronic device in a situation in which the user leaves.

The external electronic device may display the received avatar on a display. The external electronic device may adjust the avatar so that the avatar continues to be displayed on the display thereof even when the avatar moves according to the movement of the user of the electronic device. Because the electronic device or the external electronic device cannot determine whether the user is in a situation that does not want the avatar being displayed, the avatar may be continuously displayed on the display of the external electronic device even in a situation where the user of the electronic device does not want the avatar being displayed.

Technical problems to be achieved in this document are not limited to the above-described technical problems, but other technical problems not described will be clearly understood by those skilled in the art from the description below.

According to an embodiment, a face-mounted electronic device comprises a communication circuit. The electronic device includes a first camera for acquiring an image including at least a part of a user's face. The electronic device comprises a second camera for acquiring a surrounding environment image thereof. The electronic device comprises a memory storing at least one computer program including instructions. The electronic device comprises at least one processor. The instructions, when executed individually or collectively by the at least one processor, cause the electronic device to initiate (or perform) a communication connection for transmitting voice and/or video to an external electronic device using the communication circuit. The instructions cause the electronic device to generate an avatar corresponding to the user based on an image including at least a part of the user's face and/or an image of the surrounding environment. The instructions cause the electronic device to transmit the avatar to the external electronic device. The instructions cause the electronic device to determine an amount of movement based on a first image and an image of the surrounding environment changed by the movement of the electronic device, wherein the first image is the image of the surrounding environment at a time of initiating the communication connection. The instructions cause the electronic device to identify whether the amount of movement exceeds a predetermined first value. The instructions cause the electronic device to stop the transmission of the avatar in response to the amount of movement of the electronic device exceeding the predetermined first value.

According to an embodiment, a method of operating a face-mounted electronic device comprises initiating a communication connection for transmitting voice and/or video to an external electronic device using the communication circuit. The method of operating a face-mounted electronic device comprises generating an avatar corresponding to the user based on an image including at least a part of the user's face and/or an image of the surrounding environment. The method of operating a face-mounted electronic device comprises transmitting the avatar to the external electronic device. The method of operating a face-mounted electronic device comprises determining an amount of movement of the electronic device based on a first image and an image of the surrounding environment changed by the movement of the electronic device, wherein the first image is the image of the surrounding environment at a time of initiating the communication connection. The method of operating a face-mounted electronic device comprises identifying whether the amount of movement of the electronic device exceeds a predetermined first value. The method of operating a face-mounted electronic device comprises stopping the transmission of the avatar in response to the amount of movement of the electronic device exceeding the predetermined first value.

According to an embodiment, a face-mounted electronic device .identifies an amount of movement of the electronic device based on a changed surrounding environment image according to the movement of the electronic device, and stops transmitting an avatar based on the amount of movement of the electronic device. The electronic device retransmit the avatar according to a predetermined condition and re-determine a surrounding environment image for determining characteristics (a position of the avatar, a size of the avatar, an angle of the avatar) of the avatar being displayed in a situation of retransmitting the avatar.

Because the face-mounted electronic device according to an embodiment stops transmitting an avatar based on an amount of movement thereof, even if the electronic device moves in response to the movement of the user, a situation in which an avatar with unintended characteristics (e.g., a size of the avatar, a position of the avatar, an angle of the avatar) is displayed on the external electronic device can be prevented. The electronic device can prevent an avatar from being continuously displayed on a display of the external electronic device in a situation in which the user thereof does not want the avatar being displayed.

A face-mounted electronic device according to an embodiment can transmit an avatar based on a surrounding environment image at a time point of retransmitting the avatar, rather than a surrounding environment image acquired at a time point of connecting communication in a situation where the electronic device retransmits the avatar. The electronic device can create and/or display an avatar corresponding to a situation of retransmitting the avatar.

Effects that may be obtained from the disclosure are not limited to the above-described effects, and other effects not described above will be clearly understood by those of ordinary skill in the art to which the disclosure belongs from the description below.

### [Brief Description of Drawings]

FIG. 1 is a block diagram illustrating an exemplary electronic device capable of performing operations described in this document.
FIG. 2 is a perspective view schematically illustrating a constitution of an electronic device according to an embodiment.
FIG. 3A is a diagram illustrating a front surface of a head mounted display device 300 according to an embodiment of the disclosure.
FIG. 3B is a diagram illustrating a rear surface of a head mounted display device 300 according to an embodiment of the disclosure.
FIG. 4A is a diagram illustrating an electronic device according to an embodiment. FIG. 4B is a diagram illustrating an avatar created by an electronic device according to an embodiment. FIG. 4C is a diagram illustrating an avatar created by an electronic device according to an embodiment.
FIG. 5 is a block diagram illustrating an electronic device according to an embodiment of the disclosure.
FIGS. 6A, 6B, and 6C are diagrams illustrating an avatar created by an electronic device according to an embodiment of the disclosure.
FIG. 7A is a diagram illustrating an amount of movement of an electronic device according to an embodiment of the disclosure. FIG. 7B is a diagram illustrating an amount of rotation of an electronic device according to an embodiment of the disclosure.
FIG. 8 is a diagram illustrating an avatar displayed on an external electronic device according to various embodiments of the disclosure.
FIG. 9 is a diagram illustrating conditions in which an electronic device 600 transmits an avatar according to an embodiment of the disclosure.
FIG. 10 is a diagram illustrating conditions in which an electronic device 600 transmits an avatar according to an embodiment of the disclosure.
FIG. 11 is a diagram illustrating a screen displayed by an electronic device 600 according to an embodiment of the disclosure.
FIG. 12 is a flowchart illustrating an operation of an electronic device according to an embodiment of the disclosure.
FIG. 13A is a flowchart illustrating operations of an electronic device according to an embodiment of the disclosure. FIG. 13B is a flowchart illustrating operations of an electronic device according to an embodiment of the disclosure.
FIG. 14 is a diagram illustrating a screen displayed by an electronic device according to an embodiment of the disclosure.

### [Mode for the Invention]

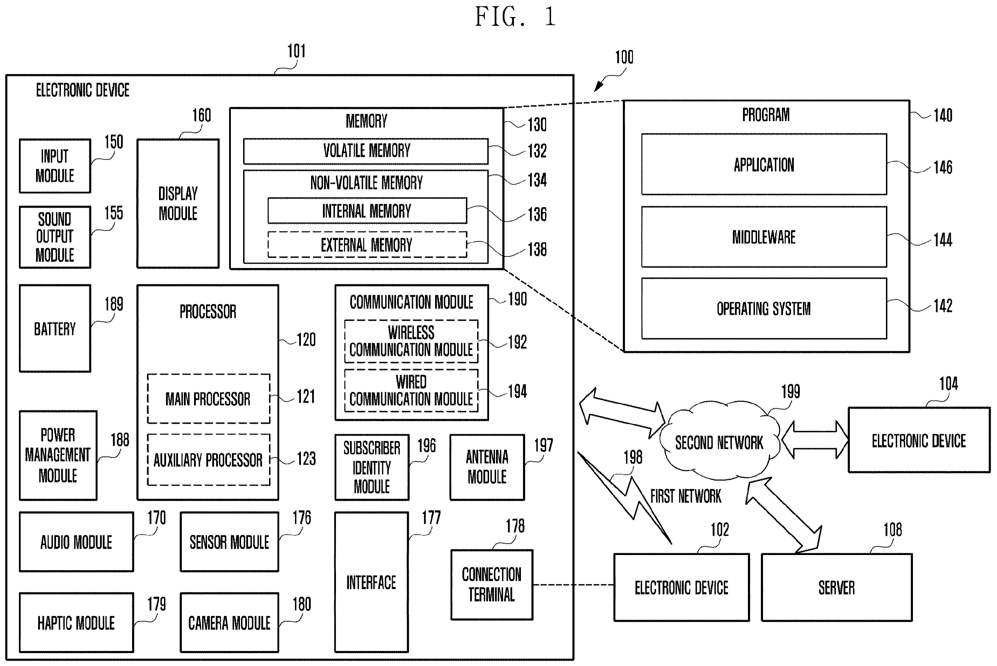

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing records. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., electronic device 102) directly (e.g., via wired connection) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., vie wired connection) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter (mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g., electronic devices 102 and 104 or server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

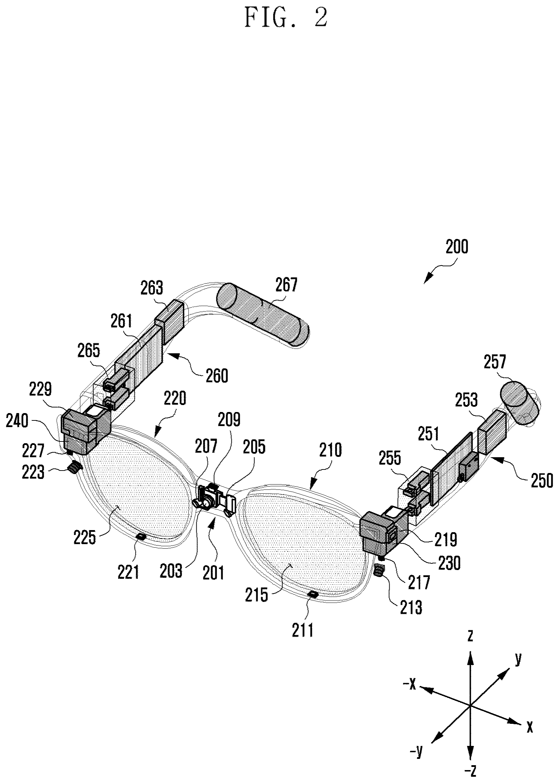

FIG. 2 is a perspective view schematically illustrating a constitution of an electronic device according to an embodiment.

A wearable electronic device 200 illustrated in FIG. 2 (e.g., the electronic device 101 of FIG. 1) may be at least partially similar to the electronic device 101 of FIG. 1 or may further include other components of the electronic device 101. The wearable electronic device 200 may include augmented reality (AR) glasses, smart glasses, and/or a video see-through (VST) device in the form of glasses.

With reference to FIG. 2, the wearable electronic device 200 may include a bridge 201, a first rim 210, a second rim 220, a first end piece 230, a second end piece 240, a first temple 250, and/or a second temple 260.

According to an embodiment, the bridge 201 may connect the first rim 210 and the second rim 220. The bridge 201 may be located on the user's nose when the user wears the wearable electronic device 200. The bridge 201 may separate the first rim 210 and the second rim 220 based on the user's nose.

According to an embodiment, the bridge 201 may include a camera module 203, a first gaze tracking camera 205, a second gaze tracking camera 207, and/or an audio module 209.

According to an embodiment, the camera module 203 (e.g., the camera module 180 of FIG. 1) may capture a front side (e.g., -y-axis direction) of a user (e.g., a user of the wearable electronic device 200) and acquire image data. The camera module 203 may capture an image corresponding to a field of view (FoV) of the user or measure a distance to a subject (e.g., object). The camera module 203 may include an RGB camera, a high resolution (HR) camera, and/or a photo video (PV) camera. The camera module 203 may include a color camera that performs an auto focus (AF) function and an optical image stabilization (OIS) function in order to acquire a high quality image.

According to an embodiment, the first gaze tracking camera 205 and the second gaze tracking camera 207 may track the gaze of the user. The first gaze tracking camera 205 and the second gaze tracking camera 207 may capture a pupil of the user looking in a direction opposite to a capturing direction of the camera module 203. For example, the first gaze tracking camera 205 may partially capture a left eye of the user, and the second gaze tracking camera 207 may partially capture a right eye of the user. The first gaze tracking camera 205 and the second gaze tracking camera 207 may detect a pupil of the user (e.g., the left eye and the right eye) and track a gaze direction corresponding to a movement of the detected pupil. The tracked gaze direction may be utilized to move the center of a virtual image including a virtual object to correspond to the gaze direction. The first gaze tracking camera 205 and/or the second gaze tracking camera 207 may track the user's gaze using, for example, at least one of an EOG sensor (electro-oculography or electrooculogram), a coil system, a dual Purkinje system, bright pupil systems, or dark pupil systems.

According to an embodiment, the audio module 209 (e.g., the audio module 170 of FIG. 1) may be disposed between the first gaze tracking camera 205 and the second gaze tracking camera 207. The audio module 209 may convert a user's voice into an electric signal, or may convert an electric signal into sound (e.g., sound source data, audio signal). The audio module 209 may include a microphone.

According to an embodiment, the first rim 210 and the second rim 220 may form a frame (e.g., glasses frame) of the wearable electronic device 200 (e.g., AR glass). The first rim 210 may be disposed in a first direction (e.g., x-axis direction) of the bridge 201. The first rim 210 may be disposed at a position corresponding to the left eye of the user. The second rim 220 may be disposed in a second direction (e.g., -x-axis direction) of the bridge 201, which is a direction opposite to the first direction (e.g., x-axis direction). The second rim 220 may be disposed at a position corresponding to the right eye of the user. The first rim 210 and the second rim 220 may be made of a metal material and/or a non-conductive material (e.g., polymer).

According to an embodiment, the first rim 210 may enclose and support at least a part of first glass 215 (e.g., first display) disposed at an inner surface thereof. The first glass 215 may be located in front of the user's left eye. The second rim 220 may enclose and support at least a part of second glass 225 (e.g., second display) disposed at an inner surface thereof. The second glass 225 may be located in front of the user's right eye. The user of the wearable electronic device 200 may view a foreground (e.g., real image) of an external object (e.g., subject) through the first glass 215 and the second glass 225. The wearable electronic device 200 may implement augmented reality by superimposing and displaying a virtual image on the foreground (e.g., real image) of the external object. According to an embodiment, the wearable electronic device 200 may implement virtual reality and express virtual reality through the first glass 215 and the second glass 225.

According to an embodiment, the first glass 215 and the second glass 225 may include a projection type transparent display. The first glass 215 and the second glass 225 may each form a reflective surface as a transparent plate (or transparent screen), and an image created in the wearable electronic device 200 may be reflected (e.g., total internal reflection) through the reflective surface and be incident on the left and right eyes of the user. In an embodiment, the first glass 215 may include an optical waveguide that transmits light generated in a light source of the wearable electronic device 200 to the left eye of the user. For example, the optical waveguide may be made of glass, plastic, or a polymer material, and include a nano-pattern (e.g., a grating structure or a mesh structure having a polygonal or curved shape) formed in the inside or surface of the first glass 215. The optical waveguide may include at least one diffractive element (e.g., diffractive optical element (DOE), holographic optical element (HOE)) or at least one reflective element (e.g., reflective mirror). The optical waveguide may guide display light emitted from a light source toward a user's eye using at least one diffractive element or reflective element included therein. In an embodiment, the diffractive element may include an input/output optical member, and the reflective element may include a total internal reflection (TIR) element. For example, light emitted from a light source may be guided along a path to the optical waveguide through an input optical member, and light traveling inside the optical waveguide may be guided toward the user's eye through the output optical member. The second glass 225 may be implemented in substantially the same manner as that of the first glass 215.

According to an embodiment, the first glass 215 and the second glass 225 may include, for example, a liquid crystal display (LCD), a digital mirror device (DMD), a liquid crystal on silicon (LCoS), an organic light emitting diode (OLED), or a micro light emitting diode (micro LED). Although not illustrated, in the case that the first glass 215 and the second glass 225 are formed with one of the liquid crystal display, the digital mirror display, or the liquid crystal on silicon, the wearable electronic device 200 may include a light source that radiates light to screen output areas of the first glass 215 and the second glass 225. In another embodiment, in the case that the first glass 215 and the second glass 225 are capable of generating light on their own, for example, in the case that they are made of either organic light emitting diodes or micro LEDs, the wearable electronic device 200 may provide a good quality of virtual images to the user even without including a separate light source.

According to an embodiment, the first rim 210 may include a first microphone 211, a first recognition camera 213, a first light emitting device 217, and/or a first display module 219. The second rim 220 may include a second microphone 221, a second recognition camera 223, a second light emitting device 227, and/or a second display module 229.

In an embodiment, the first light emitting device 217 and the first display module 219 may be included in the first end piece 230, and the second light emitting device 227 and the second display module 229 may be included in the second end piece 240.

According to an embodiment, the first microphone 211 and/or the second microphone 221 may receive a voice (e.g., spoken voice, spoken sound source data) of a user wearing the wearable electronic device 200 on the head, and convert the received user's voice into an electric signal.

According to an embodiment, the first recognition camera 213 and/or the second recognition camera 223 may recognize a surrounding space of the wearable electronic device 200. The first recognition camera 213 and/or the second recognition camera 223 may detect a user's gesture within a certain distance (e.g., certain space) of the wearable electronic device 200. The first recognition camera 213 and/or the second recognition camera 223 may include a global shutter (GS) camera in which a rolling shutter (RS) phenomenon may be reduced in order to detect and track rapid hand movements and/or fine movements of fingers of the user. The wearable electronic device 200 may detect an eye corresponding to a dominant eye and/or an auxiliary eye among the user's left eye and/or right eye using the first gaze tracking camera 205, the second gaze tracking camera 207, the first recognition camera 213, and/or the second recognition camera 223. For example, the wearable electronic device 200 may detect an eye corresponding to the dominant eye and/or the auxiliary eye based on the user's gaze direction toward an external object or a virtual object.

According to an embodiment, the first light emitting device 217 and/or the second light emitting device 227 may emit light in order to increase accuracy of the camera module 203, the first gaze tracking camera 205, the second gaze tracking camera 207, the first recognition camera 213 and/or the second recognition camera 223. The first light emitting device 217 and/or the second light emitting device 227 may be used as an auxiliary means for increasing accuracy when capturing a user's pupil using the first gaze tracking camera 205 and/or the second gaze tracking camera 207. The first light emitting device 217 and/or the second light emitting device 227 may be used as an auxiliary means when it is not easy to detect an object (e.g., subject) to be captured due to a dark environment or mixing of multiple light sources and reflection from multiple light sources in the case of capturing a user's gesture using the first recognition camera 213 and/or the second recognition camera 223. The first light emitting device 217 and/or the second light emitting device 227 may include, for example, at least one of an LED, an IR LED, and/or a xenon lamp.

According to an embodiment, the first display module 219 and/or the second display module 229 may emit light and transmit the light to the user's left eye and/or right eye using the first glass 215 and/or the second glass 225. The first glass 215 and/or the second glass 225 may display various image information using the light emitted through the first display module 219 and/or the second display module 229. The first display module 219 and/or the second display module 229 may include the display module 160 of FIG. 1. The wearable electronic device 200 may display a foreground of an external object (e.g., real external environment) and an image (e.g., virtual object, 3-dimension (3D) object) emitted through the first display module 219 and/or the second display module 229 by superimposing them through the first glass 215 and/or the second glass 225.

According to an embodiment, the first end piece 230 may be coupled to a portion (e.g., the x-axis direction) of the first rim 210. The second end piece 240 may be coupled to a portion (e.g., the -x-axis direction) of the second rim 220. In an embodiment, the first light emitting device 217 and the first display module 219 may be included in the first end piece 230. The second light emitting device 227 and the second display module 229 may be included in the second end piece 240.

According to an embodiment, the first end piece 230 may connect the first rim 210 and the first temple 250. The second end piece 240 may connect the second rim 220 and the second temple 260.

According to an embodiment, the first temple 250 may be operatively connected to the first end piece 230 using a first hinge portion 255. The first hinge portion 255 may be constituted to be rotatable so that the first temple 250 may be folded or unfolded with respect to the first rim 210. The first temple 250 may be extended, for example, along the left side of the user's head. A distal portion (e.g., the y-axis direction) of the first temple 250 may be formed, for example, in a bent shape so as to be supported on the user's left ear when the user wears the wearable electronic device 200. The second temple 260 may be operatively connected to the second end piece 240 using a second hinge portion 265. The second hinge portion 265 may be constituted to be rotatable so that the second temple 260 may be folded or unfolded with respect to the second rim 220. The second temple 260 may be extended, for example, along the right side of the user's head. A distal portion (e.g., the y-axis direction) of the second temple 260 may be formed, for example, in a bent shape so as to be supported on the user's right ear when the user wears the wearable electronic device 200.

According to an embodiment, the first temple 250 may include a first printed circuit board 251, a first sound output module 253 (e.g., the sound output module 155 of FIG. 1), and/or a first battery 257 (e.g., the battery 189 of FIG. 1). The second temple 260 may include a second printed circuit board 261, a second sound output module 263 (e.g., the sound output module 155 of FIG. 1), and/or a second battery 267 (e.g., the battery 189 of FIG. 1).

According to an embodiment, various electronic components (e.g., at least some of the components included in the electronic device 101 of FIG. 1) such as the processor 120, the memory 130, the interface 177, and/or the wireless communication module 192 disclosed in FIG. 1 may be disposed on the first printed circuit board 251 and/or the second printed circuit board 261. The processor may include, for example, one or more of a central processer, an application processor, a graphic processer, an image signal processor, a sensor hub processor, or a communication processor. The first printed circuit board 251 and/or the second printed circuit board 261 may include, for example, a printed circuit board (PCB), a flexible PCB (FPCB), or a rigid-flexible PCB (RFPCB). In some embodiments, the first printed circuit board 251 and/or the second printed circuit board 261 may include a main PCB, a slave PCB disposed to partially overlap the main PCB, and/or an interposer substrate between the main PCB and the slave PCB. The first printed circuit board 251 and/or the second printed circuit board 261 may be electrically or operatively connected to other components (e.g., the camera module 203, the first gaze tracking camera 205, the second gaze tracking camera 207, the audio module 209, the first microphone 211, the first recognition camera 213, the first light emitting device 217, the first display module 219, the second microphone 221, the second recognition camera 223, the second light emitting device 227, the second display module 229, the first sound output module 253 and/or the second sound output module 263) using electrical paths such as FPCBs and/or cables. For example, the FPCBs and/or cables may be disposed in at least a part of the first rim 210, the bridge 201, and/or the second rim 220. In some embodiments, the wearable electronic device 200 may include only one of the first printed circuit board 251 or the second printed circuit board 261.

According to an embodiment, the first sound output module 253 and/or the second sound output module 263 may transmit audio signals to the user's left and/or right ear(s). The first sound output module 253 and/or the second sound output module 263 may include, for example, a piezo speaker (e.g., bone conduction speaker) that transmits audio signals without a speaker hole. In some embodiments, the wearable electronic device 200 may include only one of the first sound output module 253 or the second sound output module 263.

According to an embodiment, the first battery 257 and/or the second battery 267 may supply power to the first printed circuit board 251 and/or the second printed circuit board 261 using a power management module (e.g., the power management module 188 of FIG. 1). The first battery 257 and/or the second battery 267 may include, for example, a non-rechargeable primary battery, a rechargeable secondary battery, or a fuel cell. In some embodiments, the wearable electronic device 200 may include only one of the first battery 257 or the second battery 267.

According to an embodiment, the wearable electronic device 200 may include a sensor module (e.g., the sensor module 176 of FIG. 1). The sensor module may generate an electric signal or a data value corresponding to an internal operating state of the wearable electronic device 200 or an external environmental state. The sensor module may further include, for example, at least one of a gesture sensor, a gyro sensor, an atmospheric pressure sensor, a magnetic sensor, an acceleration sensor, a grip sensor, a color sensor, an infrared (IR) sensor, a biometric sensor (e.g., HRM sensor), a temperature sensor, a humidity sensor, or an illumination sensor. In some embodiments, the sensor module may recognize a user's biometric information using various biometric sensors (or biometric recognition sensors) such as an e-nose sensor, an electromyography (EMG) sensor, an electroencephalogram (EEG) sensor, an electrocardiogram (ECG) sensor, or an iris sensor.

According to an embodiment, in the above description, it is described that the wearable electronic device 200 is a device that displays augmented reality using the first glass 215 and the second glass 225, but the disclosure is not limited thereto and may be a device that displays virtual reality (VR).

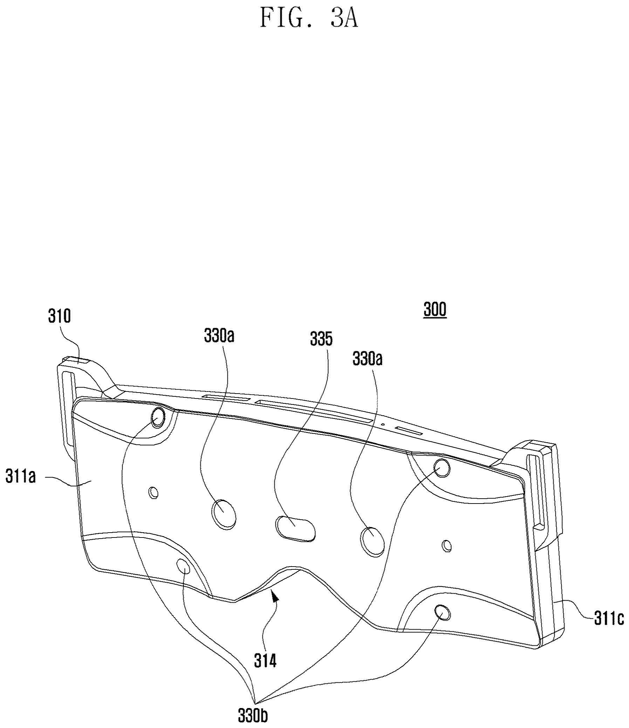

FIG. 3A is a diagram illustrating a front surface of a head mounted display device 300 according to an embodiment of the disclosure.

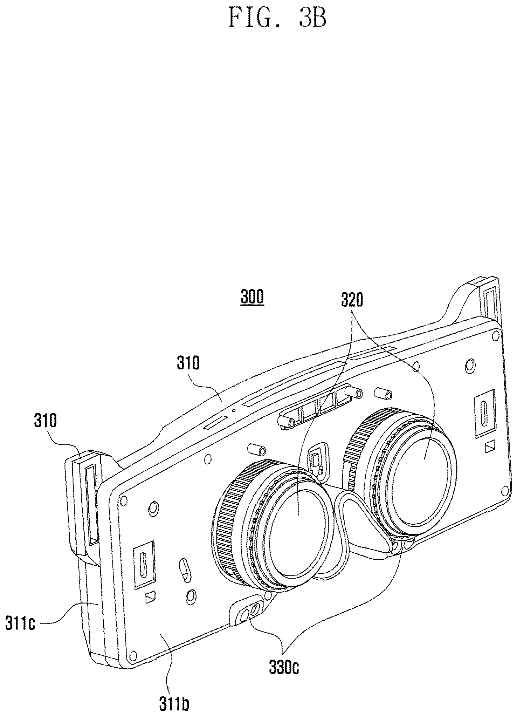

FIG. 3B is a diagram illustrating a rear surface of a head mounted display device 300 according to an embodiment of the disclosure.

With reference to FIGS. 3A and 3B, the head mounted display device 300 may be worn on a part of a user's body to provide a user interface.

In an embodiment, the head mounted display device 300 may output pictures and/or images to the user. Alternatively, the head mounted display device 300 may provide images related to an augmented reality service and/or a virtual reality service. For example, the head mounted display device 300 may provide the user with an experience of augmented reality, virtual reality, mixed reality, and/or extended reality.

For example, the head mounted display device 300 may provide augmented reality to the user. The head mounted display device 300 may transmit a virtual object image output from the display 160 toward the user's eyes, and the virtual object image may utilize data on an image of the real world captured through a plurality of cameras 330a, 330b, and 330c.

In an embodiment, the head mounted display device 300 may be, for example, a head mounted display (HMD), a face mounted display (FMD), or may be, but is not limited to, smart glasses or a headset that provides extended reality such as augmented reality (AR), virtual reality glasses (VR), or mixed reality.

In an embodiment, the head mounted display device 300 may include at least some of a housing 310, a plurality of cameras 330a, 330b, and 330c, and a display 160.

In an embodiment, the head mounted display device 300 may include a housing 310. The housing 310 may be constituted to receive at least one component. The housing 310 may include a first surface 311a (e.g., front surface), a second surface 311b (e.g., rear surface or wearing surface) opposite to the first surface 311a, and a third surface 311c (e.g., side surface) between the first surface 311a and the second surface 311b.

In an embodiment, the housing 310 may include a bridge 314. The bridge 314 may be constituted to face a portion (e.g., nose) of the user's body. For example, the bridge 314 may be supported by the user's nose.

In an embodiment, the housing 310 may correspond to a main body of the head mounted display device 300. The housing 310 may be identical to the main body of the head mounted display device 300.

In an embodiment, the housing 310 may be mounted on the user's head by a wearable structure such as a template or strap.

In an embodiment, the head mounted display device 300 may include a lens structure 330. The lens structure 330 may include a plurality of lenses constituted to adjust a focus of an image provided to the user. For example, the plurality of lenses may be constituted to adjust a focus of an image output by the display 160. The plurality of lenses may be disposed at positions corresponding to a position of the display 160. The plurality of lenses may include, for example, a Fresnel lens, a pancake lens, a multi-channel lens, and/or any other suitable lens.

In an embodiment, the display 160 may be disposed at a position corresponding to the lens structure 330.

In an embodiment, the head mounted display device 300 may include a display 160. The display 160 may be constituted to provide an image (e.g., virtual image) to the user. For example, the display 160 may include a liquid crystal display (LCD), a digital mirror device (DMD), a liquid crystal on silicon (LCoS), an organic light emitting diode (OLED), and/or a micro light emitting diode (micro LED).

In an embodiment, in the case that the display 160 includes at least one of the liquid crystal display, the digital mirror display, or the liquid crystal on silicon, the head mounted display device 300 may include a light source that radiates light onto a screen output area of the display 160.

In an embodiment, in the case that the display 160 is capable of generating light on its own, for example, in the case that the display 160 includes at least one of an organic light emitting diode or a micro LED, the head mounted display device 300 may provide a good quality of virtual images to the user even without including a separate light source.

In an embodiment, when the display 160 includes an organic light emitting diode or micro LED, a light source is unnecessary; thus, the head mounted display device 300 may be made lightweight. The head mounted display device 300 may include the display 160 and at least one transparent member. The user may use the head mounted display device 300 in a state of wearing the head mounted display device 300 on the face thereof. The at least one transparent member may be formed with a glass plate, a plastic plate, or a polymer and be produced to be transparent or translucent.

In an embodiment, at least one transparent member may be disposed to face the user's right or left eye.

In an embodiment, in the case that the display 160 is transparent, the display 160 may be disposed to face the user's eyes to form a screen display unit. In an embodiment, the display 160 may include a light source (not illustrated) constituted to transmit a light signal to an area where an image is output.

In an embodiment, the display 160 may generate optical signals on its own to provide images to the user.

In an embodiment, the display 160 may be disposed at the second surface 311b of the housing 310. For example, one surface of a pair of lenses of the display 160 may be located to expose to the outside through the second surface 311b.

In an embodiment, the display 160 may be composed of organic light emitting diodes (OLEDs). For example, OLEDs may express red (R, red), green (G, green), and blue (B, blue) through self-luminescence of an organic material. However, the disclosure is not limited thereto, and one pixel may include R, G, and B, and one chip may be implemented into multiple pixels including R, G, and B.

In an embodiment, the display 160 may display various images. Here, the image is a concept including still images and moving images, and the display 160 may display various images such as broadcast contents and multimedia contents. Further, the display 160 may display a user interface (UI) and icons.

In an embodiment, the display 160 includes a separate IC chip, and the IC chip may display an image based on an image signal received from the processor 120. In an embodiment, the IC chip may generate driving signals of a plurality of light emitting elements based on the image signal received from the processor 120, and control light emission of a plurality of pixels included in the display panel based on the driving signals to display an image.

In an embodiment, the display 160 may include a plurality of pixels for displaying a virtual image. The display 160 may further include infrared pixels that emit infrared light.

In an embodiment, the display 160 may further include a light receiving pixel (e.g., photo sensor pixel) disposed between the pixels and configured to receive light reflected from a user's eyes, convert it into electrical energy, and output it. The light receiving pixel may be referred to as an 'eye tracking sensor'. The eye tracking sensor may detect infrared light reflected by a user's eyes from light emitted by infrared pixels included in the display 160.

In an embodiment, the head mounted display device 300 may detect the user's gaze direction (e.g., eye movement) through the light receiving pixels.

In an embodiment, the head mounted display device 300 may determine a position of the center of the virtual image according to the gaze directions of the user's left and right eyes (e.g., the direction in which the pupils of the user's left and right eyes are gazing) detected through one or more light receiving pixels.

In an embodiment, the head mounted display device 300 may include at least one display. The head mounted display device 300 may include the display 160 as a main display and a 3D display as a secondary display or an external display.

In an embodiment, the display 160 may include a focusing lens and/or a transparent waveguide pipe. For example, the transparent waveguide pipe may be located at least partially within a portion of the glass.

In an embodiment, light emitted from the display 160 may be incident on one end of the glass, and the incident light may be transmitted to the user through a waveguide pipe and/or waveguide formed within the glass. The waveguide pipe may be made of glass, plastic, or polymer, and include a nano-pattern, for example, a grating structure having a polygonal or curved shape formed on one inner or outer surface.

In an embodiment, the incident light may be propagated or reflected within the waveguide pipe by the nano-pattern to be provided to the user.

In an embodiment, the waveguide may include at least one diffractive element (e.g., diffractive optical element (DOE), a holographic optical element (HOE)) or at least one reflective element (e.g., reflective mirror).

In an embodiment, the waveguide may guide display light emitted from the light source to the user's eye using at least one diffractive element or reflective element.

In an embodiment, the waveguide serves to transmit light generated by the display to the user's eyes.

In an embodiment, the waveguide may be made of glass, plastic or polymer and include nano-patterns, for example, a grating structure having a polygonal or curved shape formed on some of inner or outer surfaces thereof.

In an embodiment, light incident on one end of the waveguide pipe may be propagated inside an optical waveguide of the display 160 by a nano-pattern to be provided to the user. Further, the optical waveguide composed of a free-form prism may provide the incident light to the user through a reflective mirror. The optical waveguide may include at least one diffractive element (e.g., diffractive optical element (DOE), a holographic optical element (HOE)) or at least one reflective element (e.g., reflective mirror). The optical waveguide may guide display light emitted from the light source unit to the user's eyes using at least one diffractive element or reflective element included therein.

In an embodiment, the diffractive element may include an input optical member/output optical member (not illustrated). For example, the input optical member may mean an input grating area, and the output optical member (not illustrated) may mean an output grating area. The input grating area may serve as an input terminal that diffracts (or reflects) light output from, for example, a micro LED in order to transmit light to a transparent member (e.g., first transparent member, second transparent member) of the screen display unit. The output grating area may serve as an outlet that diffracts (or reflects) light transmitted to the transparent member (e.g., first transparent member, second transparent member) of the waveguide to the user's eye.

In an embodiment, the reflective element may include a total internal reflection (TIR) optical element or a TIR waveguide pipe for TIR. For example, TIR may mean a method of guiding light to form an incident angle such that light (e.g., virtual image) entering through an input grating area is 100% reflected from one surface (e.g., specific surface) of the waveguide; thus, it is 100% transmitted to the output grating area.

In an embodiment, light emitted from the display 160 may be guided along an optical path into the waveguide through an input optical member. Light traveling inside the waveguide may be guided toward a user's eyes through an output optical member. The screen display unit may be determined based on light emitted toward the eyes.

In an embodiment, the head mounted display device 300 may include a sensor 176. The sensor 176 may be constituted to detect a depth of a subject. The sensor 176 may be constituted to transmit a signal toward the subject and/or receive a signal from the subject. For example, the transmitting signal may include near infrared, ultrasound, and/or laser. The sensor 176 may be constituted to measure a time of flight (ToF) of the signal in order to measure a distance between the head mounted display device 300 and the subject. The sensor 176 may be disposed at the first surface 311a of the housing 310.

In an embodiment, the sensor 176 may include a depth sensor. The depth sensor may be used for the purpose of identifying a distance to an object. The depth sensor (e.g., the depth sensor 335 of FIG. 3A) may include time of flight (ToF) technology. ToF technology may include technology that measures a distance to an object using a signal (near infrared, ultrasound, laser, and the like). TOF technology may measure a flight time of a signal by emitting a signal from a transmitter and measuring the signal by a receiver.

In an embodiment, the camera 180 of FIG. 1 may include a plurality of cameras 330a, 330b, and 330c.

In an embodiment, the plurality of cameras 330a, 330b, and 330c may include at least some of the first camera 330a, the second camera 330b, or the third camera 330c. The plurality of cameras 330a, 330b, and 330c may capture images of the exterior of the housing 310, for example, a user and/or other subjects. For example, the plurality of cameras 330a, 330b, and 330c may convert optical signals into input data and provide them to the processor 120. In an embodiment, the processor 120 may receive the transmitted input data and transmit output data to the display 160. The processor 120 may combine data received from each of the plurality of cameras 330a, 330b, and 330c and process the combined data to control the display 160.

In an embodiment, the first camera 330a including at least one photographing camera and the second camera 330b including at least one recognition camera are spaced apart from the first surface 311 a of the housing 310 to capture a direction in which the first surface 311a of the housing 310 faces.

In an embodiment, the camera 180 of FIG. 1 may include at least some of the first camera 330a, the second camera 330b, or the third camera 330c.

In an embodiment, the first camera 330a and the second camera 330b may be spaced apart from each other at the first surface 311a of the housing 310. The first camera 330a and the second camera 330b may be disposed to face different directions to capture various directions, as in the first surface 311a or the third surface 311c.

In an embodiment, the first camera 330a may be constituted to acquire an image from a subject. The first camera 330a may be formed in plurality, and one first camera 330a of the plurality of first cameras 330a may be disposed in a partial area of the first surface 311a of the housing 310, and another first camera 330a may be disposed in another area of the housing 310 different from a first portion of the first surface 311a of the housing 310.

In an embodiment, a plurality of first cameras 330a may be disposed at each side of both sides of a depth sensor 335. The plurality of first cameras 330a may include an image stabilizer actuator (not illustrated) and/or an autofocus actuator (not illustrated). For example, the plurality of first cameras 330a may include at least one of a camera constituted to acquire a color image, a global shutter camera, or a rolling shutter camera, or a combination thereof.

In an embodiment, the second camera 330b may be constituted to recognize a subject. The second cameras 330b may be formed in plurality, and the plurality of second cameras 330b may be constituted to detect and/or track an object (e.g., a head or hand of a human body) or a space with three or six degrees of freedom. For example, the plurality of second cameras 330b may include global shutter cameras. The plurality of second cameras 330b may be constituted to perform simultaneous localization and mapping (SLAM) using depth information of the subject. The plurality of second cameras 330b may be constituted to recognize a gesture of the subject.

In an embodiment, a plurality of second cameras 330b may be disposed at the first surface 311a of the housing 310.

In an embodiment, the first camera 330a and the second camera 330b may be cameras for taking pictures, which may be referred to as high resolution (HR) or photo video (PV) cameras, and include high-resolution cameras. The first camera 330a and the second camera 330b may include a color camera equipped with functions for obtaining high-quality images such as an auto focus (AF) function and an optical image stabilizer (OIS). The disclosure is not limited thereto, and the first camera 330a and the second camera 330b may include a global shutter (GS) camera or a rolling shutter (RS) camera.

In an embodiment, the head mounted display device 300 may include a plurality of third cameras 330c. The plurality of third cameras 330c may be constituted to recognize a user's face. For example, the plurality of third cameras 330c may be constituted to detect and track a user's facial expression.

In an embodiment, the third camera 330c may include at least one camera for facial recognition or at least one camera for eye tracking.

In an embodiment, the head mounted display device 300 may further include a gaze tracking camera in at least some of the plurality of third cameras 330c. The gaze tracking camera may be used for detecting and tracking the pupil.

In an embodiment, the third camera 330c may detect and track the pupil. The third camera 330c may include a plurality of cameras to correspond to the left eye and the right eye.

In an embodiment, at least one of the plurality of cameras 330a, 330b, and 330c may include a camera to be used for 3 degrees of freedom (DoF), 6 DoF head tracking, hand detection and tracking, gesture and/or spatial recognition.

In an embodiment, at least one of the plurality of cameras 330a, 330b, and 330c may include a global shutter (GS) camera in order to detect head and hand movements and track movements. For example, a stereo camera may be used for head tracking and spatial recognition; thus, two GS cameras of the same specification and performance may be used, and a rolling shutter (RS) camera may be used for detecting and tracking rapid hand movements and fine movements such as fingers.

In an embodiment, at least one of the plurality of cameras 330a, 330b, and 330c may primarily be used, but it is not necessarily limited to a GS camera with a superior performance (e.g., image drag) compared to the camera, and for example, an RS camera may be used. At least one of the plurality of cameras 330a, 330b, and 330c may perform spatial recognition for six DoF and simultaneous localization and mapping (SLAM) functions through depth shooting. At least one of the plurality of cameras 330a, 330b, and 330c may perform a user gesture recognition function.

In an embodiment, the head mounted display device 300 may include an inertial measurement unit (IMU) sensor. The IMU sensor may include at least one of an acceleration sensor, a gyroscope, or a magnetometer. The head mounted display device 300 may detect a user's movement based on the IMU sensor.

In an embodiment, although not illustrated in the drawing, the head mounted display device 300 may include at least some of a sensor (not illustrated), a lighting unit (not illustrated), a plurality of microphones (not illustrated), a plurality of speakers (not illustrated), a battery (not illustrated), and a printed circuit board (not illustrated).

In an embodiment, one or more sensors (not illustrated) may exist for various purposes (e.g., gyro sensor, acceleration sensor, geomagnetic sensor, and/or gesture sensor), and for example, the sensors (not illustrated) may perform at least one of head tracking for 6 DoF, pose estimation & prediction, gesture and/or spatial recognition, and/or slam function through depth capturing.

In an embodiment, a lighting unit (not illustrated) may have various uses according to a position to which it is attached. For example, the lighting unit (not illustrated) may be attached around the second surface 311b of the head mounted display device 300. The lighting unit (not illustrated) may be used as an auxiliary means for facilitating eye gaze detection when the gaze tracking camera (not illustrated) photographs a pupil. The lighting unit (not illustrated) may use an infra-red light emitting device (IR LED) of a visible light wavelength or infrared wavelength.

For example, the lighting unit (not illustrated) may be attached to the front surface 311a of the head mounted display device 300 or surroundings thereof. The lighting unit (not illustrated) may be used as a means for supplementing surrounding brightness when the plurality of front cameras 330a and 330b shoot. The lighting unit (not illustrated) may be used particularly when it is difficult to detect a subject to shoot due to a dark environment or mixing of multiple light sources and reflected light from multiple light sources.

In an embodiment, the lighting unit (not illustrated) may be omitted. The lighting unit (not illustrated) may be replaced by an infrared pixel included in the display 160. The lighting unit (not illustrated) may be included in the head mounted display device 300 to assist infrared pixels included in the display 160.

In an embodiment, a plurality of microphones (not illustrated) may process external sound signals into electrical voice data. The processed voice data may be utilized in various ways according to a function being performed (or an application being executed) in the head mounted display device 300.

In an embodiment, a plurality of speakers (not illustrated) may output audio data received from a communication circuit or stored in the memory 120.

In an embodiment, one or more batteries (not illustrated) may be included in the head mounted display device 300 and supply power to components constituting the head mounted display device 300.

In an embodiment, a printed circuit board (not illustrated) may transmit electrical signals to each circuit (e.g., camera, display, audio, or sensor) and other printed circuit boards through a flexible printed circuit board (FPCB).

In an embodiment, a control circuit (not illustrated) that controls components constituting the head mounted display device 300 may be located on a printed circuit board (not illustrated).

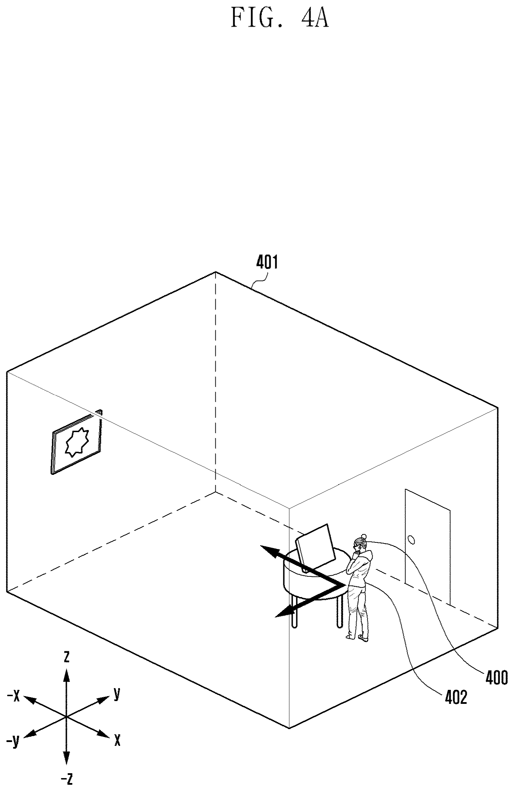

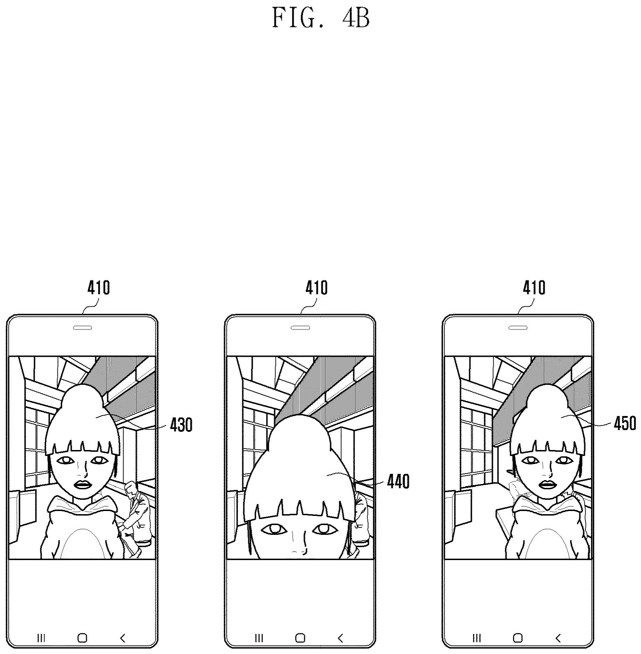

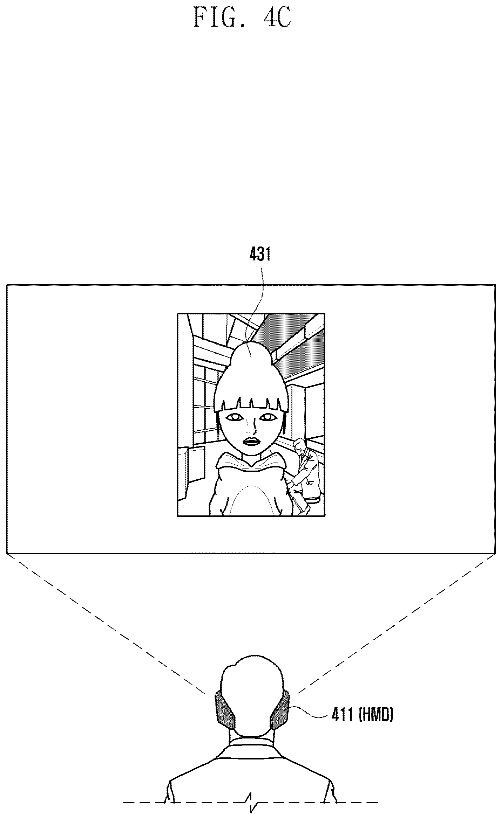

FIG. 4A is a diagram illustrating an electronic device according to an embodiment. FIG. 4B is a diagram illustrating an avatar created by an electronic device according to an embodiment. FIG. 4C is a diagram illustrating an avatar created by an electronic device according to an embodiment.

An electronic device 400 may perform a communication connection with an external electronic device 410 using a communication circuit, and perform a video call based on communication connection. In the case that the electronic device 400 performs a video call, the electronic device 400 may create an avatar 430 corresponding to a user 402 thereof. While performing the video call, the electronic device 400 may transmit the created avatar 430 to the external electronic device 410, and the external electronic device 410 may display the avatar 430 received from the electronic device 400 on a display of the external electronic device 410. The external electronic device of the disclosure may be a device of various forms. The electronic device may include, for example, a portable communication device (e.g., smartphone), a computer device, a portable multimedia device, a portable medical device, a camera, a wearable device, or a home appliance device. The electronic device according to the embodiment of this document is not limited to the above-described devices. An external electronic device 411 according to an embodiment may be in the form of a head mounted device (HMD). The external electronic device 411 in the form of an HMD may display an avatar 431 received from the electronic device on the display.

According to an embodiment, the electronic device 400 may move in response to the movement of the user 402 wearing the same. The electronic device 400 may determine characteristics (e.g., a size of the avatar, a position of the avatar, an angle of the avatar) of the avatar 430 being displayed based on the movement thereof. For example, the electronic device 400 may change the size of the avatar based on the movement thereof in the forward-backward direction (+x, - x direction), or change the displayed position on the display of the external electronic device 410 based on the movement thereof in the left-right direction (+y, -y direction). However, because the size and/or position of the avatar 430 is determined based on a surrounding environment 401 and the position of the electronic device 400 at the time point of communication connection, an unintended avatar 440 may be displayed on the external electronic device 410 in a situation where the user 402 leaves. For example, in a situation where the user 402 moves forward, the avatar may be displayed abnormally large.

According to an embodiment, the external electronic device 410 may display the received avatar 430 on the display. The external electronic device 410 may adjust the avatar so that the avatar is continuously displayed on the display of the external electronic device 410 even if the avatar 430 moves according to the movement of the user 402 of the electronic device 400. For example, the external electronic device 410 may display an avatar 450 adjusted so that an avatar 450 does not disappear from the display even if the avatar moves. When the movement of the avatar according to the movement of the user 402 of the electronic device 400 is completed, the external electronic device 410 may adjust a position of the avatar 450 to a specific position on a display screen of the display (e.g., a substantial central portion on the display screen of the display). However, the external electronic device 410 may adjust to display the avatar 450 to a specific position (e.g., a substantial central portion on the display screen of the display) on the display screen of the display of the external electronic device 410 even in a situation where the user 402 wants to leave. Because the electronic device 400 cannot determine whether the user 402 is in a situation that does not want the avatar being displayed, the electronic device 400 may continue to transmit the avatar 450 to the external electronic device 410. Accordingly, the avatar 450 may be displayed on the display of the external electronic device 410. For example, even in a situation where the user 402 leaves in the -y direction, the external electronic device 410 may adjust the avatar 450 not to disappear from the display and adjust a position of the avatar 450 to a specific position (e.g., a substantial central portion on the display screen of the display) on the display screen of the display; thus, the avatar 450 may be continuously displayed on the display.

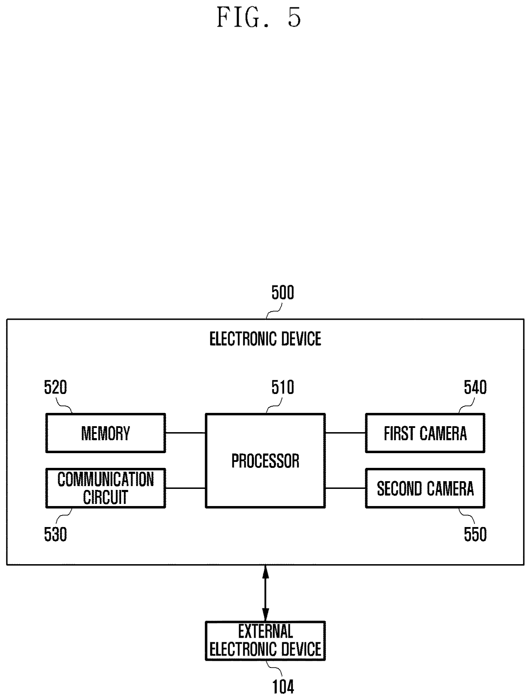

According to an embodiment, in order to prevent abnormal transmission of an avatar 440 due to a movement of an electronic device 400 or to prevent a situation in which the avatar 450 is displayed on the external electronic device 410 even when the user 402 leaves, the electronic device 400 needs a criterion for stopping avatar transmission. For example, if a movement amount or rotation amount exceeding a predetermined condition occurs, the electronic device 400 needs to stop avatar transmission to the external electronic device 410. Hereinafter, the electronic device that stops avatar transmission or retransmits the avatar will be described with reference to FIGS. 5 to 13.

FIG. 5 is a block diagram illustrating an electronic device according to an embodiment of the disclosure.

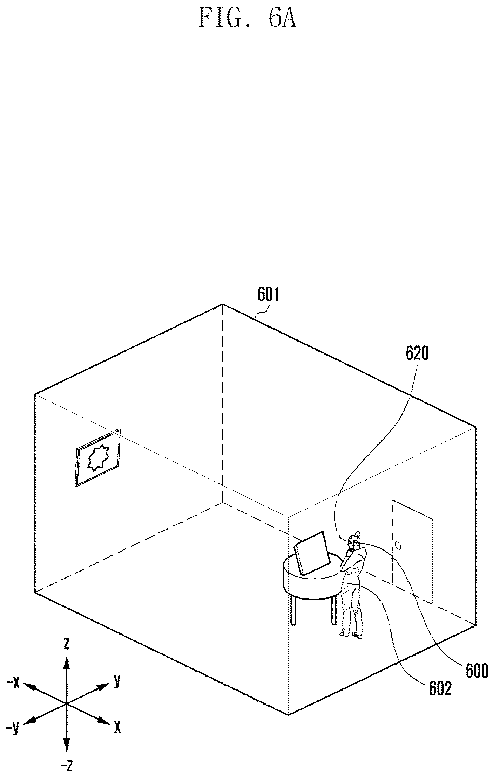

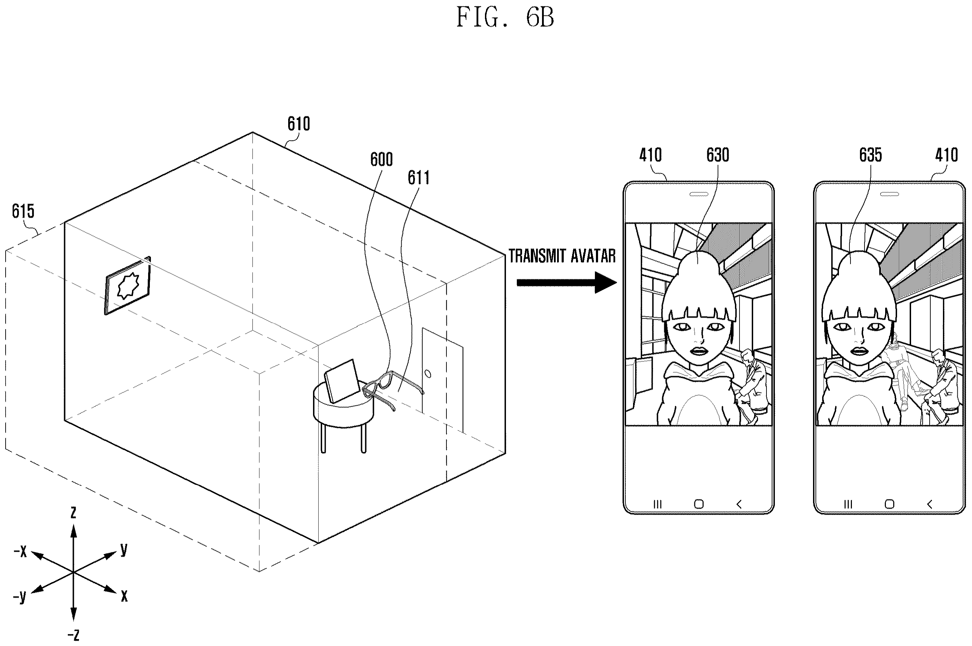

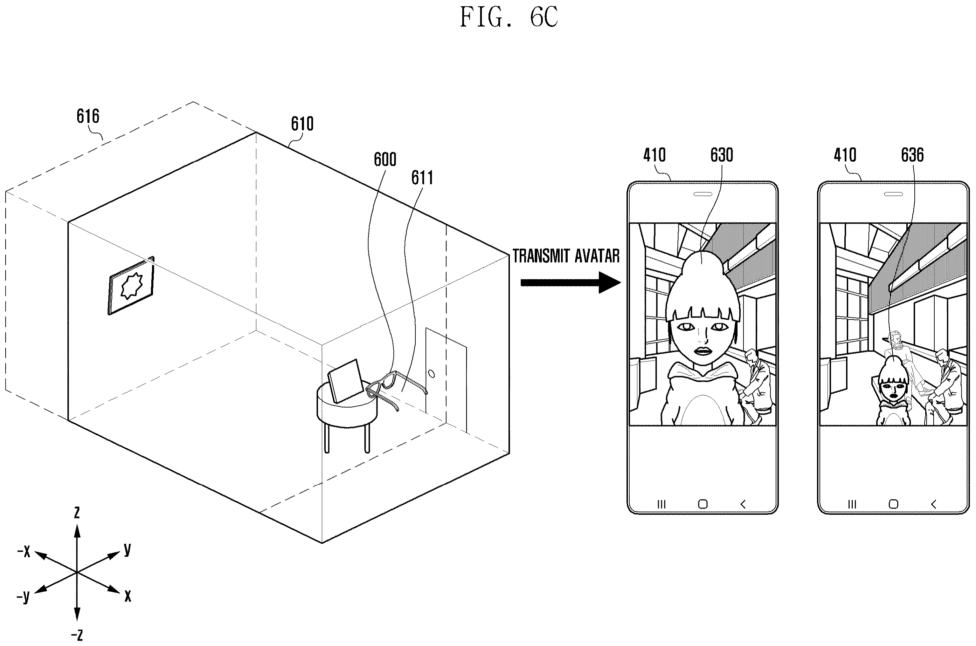

According to an embodiment, an electronic device 500 (e.g., the electronic device 101 of FIG. 1, the electronic device 200 of FIG. 2, the head mounted display device 300 of FIG. 3, and an electronic device 600 of FIG. 6) may include a processor 510, a memory 520, a communication circuit 530, a first camera 540 and/or a second camera 550. Even if some of the illustrated constitutions are omitted or replaced with other constitutions, various embodiments of this document may be implemented. In addition to the illustrated constitutions, the electronic device may further include at least some of the constitutions and/or functions of the electronic device 101 of FIG. 1 and the constitutions and/or functions of the electronic device 200 of FIG. 2. At least some of the illustrated (or not illustrated) respective components of the electronic device may be operatively, functionally, and/or electrically connected to each other.

According to an embodiment, the processor 510 may include at least one processing circuitry, and the processor 510 may include at least one processor 510. The operations described below may be performed individually or collectively by at least one processor 510 included in the processor 510.

According to an embodiment, the memory 520 may store at least one computer program, and the at least one computer program may include instructions that may be executed by the processor 510. The operations of the processor 510 described below may be performed according to the execution of instructions included in the memory 520.

According to an embodiment, the communication circuit 530 may include various hardware and/or software components for supporting wireless communication with an external electronic device 104. The communication circuit 530 may support short-range wireless communication (e.g., Wi-Fi, or Bluetooth) and/or cellular wireless communication (e.g., 4G LTE, or 5G NR). The communication circuit 530 may include at least some of the constitutions and/or functions of the communication module 190 of FIG. 1.

According to an embodiment, the first camera 540 may include at least one lens and at least one image sensor. For example, the first camera 540 may acquire an image corresponding to the subject using an image sensor that converts light emitted from the subject or reflected by the subject and transmitted through at least one lens into an electrical signal. The first camera 540 may be located in a direction facing the user's face. The first camera 540 may capture at least a part of the user's face. The first camera 540 may track changes on the user's face while the user wears or uses the electronic device 500.

According to an embodiment, the second camera 550 may include at least one lens and at least one image sensor. For example, the second camera 550 may acquire an image corresponding to the subject using an image sensor that converts light emitted from the subject or reflected by the subject and transmitted through at least one lens into an electrical signal. The second camera 550 may be a camera distinguished from the first camera 540. The second camera may be a camera that photographs a surrounding environment in which the electronic device 500 is located. The second camera may acquire a changed surrounding environment image as the electronic device 500 moves.

According to an embodiment, the first camera 540 and the second camera 550 included in the electronic device 500 may include some of the gaze tracking cameras (e.g., the first gaze tracking camera 205 and the second gaze tracking camera 207 of FIG. 2) of FIG. 2 and the recognition cameras (e.g., the first recognition camera 213 and the second recognition camera 223 of FIG. 2), but are not limited to these cameras. The first camera 540 may include at least one camera for acquiring an image including a user's face. The second camera 550 may include at least one camera for acquiring a surrounding environment image of the electronic device 500. The first camera 540 and the second camera 550 may transmit the acquired images to the processor 510.

According to an embodiment, the processor 510 may perform a communication connection with the external electronic device 104 using the communication circuit 530. The processor 510 may perform a voice call and/or a video call through communication connection with the external electronic device 104.

According to an embodiment, in the case that the processor 510 performs a communication connection with the external electronic device 104, the processor 510 may transmit at least one image to the external electronic device 104 using the communication circuit 530. For example, in a situation where a video call is performed with the external electronic device 104, the processor 510 may transmit an image of the user or an avatar representing the user to the external electronic device 104. An avatar described in the disclosure may refer to a visual object corresponding to a user. For example, an avatar may be a visual object created based on characteristics of the user, and an avatar may be a visual object selected by the user. The disclosure is not limited to an avatar, and may be applied to displaying a visual object corresponding to the user as well as an avatar.

According to an embodiment, the processor 510 may transmit information corresponding to the avatar to the external electronic device. The information corresponding to the avatar may include information extracted from images acquired by the first camera 540 and the second camera 550. For example, the information corresponding to the avatar may include at least one of a face of the avatar, a size of the avatar, or a position of the avatar. The processor may transmit the avatar to the external electronic device and transmit information corresponding to the avatar to the external electronic device according to the images acquired by the first camera 540 and the second camera 550. The external electronic device 104 may change the avatar displayed on the display of the external electronic device based on the information corresponding to the avatar.

According to an embodiment, the processor 510 may extract additional information based on images acquired through the first camera 540 and the second camera 550. The processor may transmit the extracted additional information to the external electronic device. The processor may extract additional information from images acquired through the first camera 540 and the second camera 550, even if the information does not correspond to an avatar. For example, the additional information may include information indicating a surrounding environment in which the user is located. In the case that an object is included in the surrounding environment image acquired by the second camera 550, the processor may extract additional information related to the object and transmit the additional information to the external electronic device. The external electronic device 104 may receive the additional information and display an object corresponding to the additional information on the display.

According to an embodiment, the first camera 540 may acquire an image including a portion of the user's face while the user wears the electronic device 500. The first camera 540 may capture the user wearing the electronic device 500. The first camera 540 may include at least one camera for identifying the movement of the user's face. The first camera 540 may capture a portion of the user's body as well as the user's face.

According to an embodiment, the first camera 540 may acquire an image including a portion of the user's face changed according to the movement of the user's face. The first camera 540 may operate continuously as well as temporarily. The first camera 540 may include the first gaze tracking camera and the second gaze tracking camera of FIG. 2, and track the gaze of the user to identify a movement of the user's pupils. For example, the first camera 540 may identify a motion of blinking the eyes of the user of the electronic device 500. The first camera 540 may monitor not only the gaze but also other body parts (e.g., lips). The first camera 540 may transmit the acquired image including a portion of the user's face to the processor 510.

According to an embodiment, the second camera 550 may acquire a surrounding environment image of the electronic device 500 while the user wears the electronic device 500. The second camera 550 may include at least one camera for capturing an external image. The surrounding environment may be a space where the electronic device 500 is located, and the surrounding environment image may be an image for rendering a space where the electronic device 500 is located or a rendered image. The surrounding environment image may be an image of a space where the user wearing the electronic device 500 is located, or an image that does not include the user. The surrounding environment image may be a surrounding environment image including objects in the space where the electronic device 500 is located.

According to an embodiment, the second camera 550 may acquire a changed surrounding environment image according to the movement of the electronic device 500. The second camera 550 may operate continuously as well as temporarily. The movement of the electronic device 500 may occur according to the movement of the user wearing the electronic device 500, and the second camera 550 may capture a changed surrounding environment according to the movement of the electronic device 500. The second camera 550 may transmit the acquired surrounding environment image to the processor 510.

According to an embodiment, the processor 510 may create an avatar, which is a graphic object representing the user based on an image including a portion of the user's face and/or a changed surrounding environment image according to the movement of the electronic device 500. The processor 510 may create an avatar at a time point of performing a video call. The processor may reflect a face of the avatar corresponding to the user's face based on an image including at least a part of the user's face acquired by the first camera to the created avatar. The processor may reflect characteristics (e.g., a size of the avatar, a position of the avatar, an angle of the avatar) of the avatar being displayed based on the changed surrounding environment image acquired by the second camera to the created avatar. The electronic device of the disclosure creating an avatar may include reflecting the face of the avatar according to an image including at least a part of the user's face acquired by the first camera to the created avatar. The electronic device of the disclosure creating an avatar may include reflecting characteristics (e.g., a size of the avatar, a position of the avatar, an angle of the avatar) of the avatar being displayed based on the changed surrounding environment image acquired by the second camera to the created avatar.

According to an embodiment, the processor 510 may create an avatar transmitted to the external electronic device using an image acquired using the second camera 550. The second camera 500 may acquire an image including the user's face. The processor 510 may extract information representing the user's face based on the image including the user's face acquired using the second camera 550. The processor 510 may identify an area corresponding to the user's face in the image acquired using the second camera 550 and identify a plurality of points in the area corresponding to the user's face. The plurality of points may refer to a plurality of points commonly included in a human face. The processor 510 may extract information representing the user's face based on the plurality of points included in the user's face. Information representing the user's face may include a position, shape, size, and/or color of a specific area on the user's face (e.g., an area corresponding to the eyes, nose, and/or mouth). The information representing the user's face may include information representing a relationship (e.g., distance) between specific areas (e.g., areas corresponding to eyes, nose, and/or mouth). The processor 510 may reflect information representing the user's face to create an avatar. The processor may transmit the created avatar to the external electronic device and change characteristics of the avatar being displayed on the display of the external electronic device based on an image acquired by the first camera 540.

According to an embodiment, the processor 510 may create an avatar and transmit the avatar to the external electronic device. The processor 510 may acquire an image including a portion of the user's face using the first camera 540 while the user wears the electronic device 500. The processor 510 may identify change points (e.g., eyes, nose, mouth) of the user's face in the image including a portion of the user's face. The change points may refer to at least one point on the user's face that may be configured based on the user's face. The processor 510 may identify a position of change points for each image acquired by the first camera 540 and generate information for updating the face of the avatar corresponding to the user's face. For example, the processor 510 may generate information that renders the user's face.

According to an embodiment, the processor 510 may transmit information reflecting a predetermined change point position for each image acquired by the first camera 540 to the external electronic device. For example, the processor 510 may transmit information for updating an avatar's face corresponding to the user's face for each image acquired by the first camera 540 to the external electronic device, and the external electronic device 104 may display an avatar according to the received change point position on the display. According to an embodiment, a position of a change point corresponding to an eyelid on an image of the user's face acquired by the first camera may be changed in response to a motion of the user blinking his or her eyes. The processor 510 may transmit a position of the change point corresponding to the eyelid changed as the user blinks his or her eyes to the external electronic device. The external electronic device 104 may update (or adjust) the position of the eyelid of the avatar's face in response to the position of the change point corresponding to the eyelid.

The processor 510 may create an avatar and change characteristics (e.g., a size of the avatar, a position of the avatar, an angle of the avatar) of the created avatar being displayed. Characteristics of the avatar being displayed may include a position and size being displayed on the display of the external electronic device. The processor 510 may change characteristics of the avatar being displayed based on the surrounding environment image acquired using the second camera 550. The processor 510 may acquire an image including the user's face using the first camera 540 even after the avatar is created while the user is wearing the electronic device 500. The processor 510 may change characteristics of the avatar being displayed for each surrounding environment image acquired by the second camera and transmit the changed characteristics to the external electronic device. The external electronic device 104 may display the avatar on the display according to characteristics of the avatar being displayed that are changed by the processor. The size and position of the avatar being displayed on the display of the external electronic device may be changed based on information transmitted by the processor to the external electronic device. For example, the processor 510 may determine a size of the avatar based on the surrounding environment image acquired using the second camera 550. The surrounding environment image may be changed in response to the movement of the user wearing the electronic device 500. The processor may detect the movement of the electronic device based on the changed surrounding environment image. For example, when the electronic device 500 moves according to the movement of the user, the surrounding environment image acquired by the second camera 550 may be changed in response to the movement of the electronic device. The processor 510 may change the position of the avatar being displayed on the display of the external electronic device in response to the movement of the electronic device. The processor 510 may detect a direction and/or amount of movement of the electronic device based on the changed surrounding environment image.

According to an embodiment, the processor 510 may identify the degree to which the surrounding environment image transmitted through the second camera 550 has changed, and determine the size of the avatar based on the changed surrounding environment image. The processor 510 may detect the movement of the electronic device 500 based on the changed surrounding environment image. The processor 510 may determine the size of the avatar displayed on the external electronic device 104 in response to the detected movement of the electronic device 500. For example, the processor 510 may detect that the size of an object located in front of the electronic device 500 decreases on the changed surrounding environment image. The processor may detect that the electronic device moves backward in response to the decrease in the size of the object. In the case that the processor 510 detects the movement of the electronic device moving backward, the processor 510 may increase the size of the avatar being displayed on the external electronic device 104. For example, the processor 510 may detect that the size of an object located in front of the electronic device 500 increases on the changed surrounding environment image. The processor 510 may detect that the electronic device moves forward in response to the increase in the size of the object. In the case that the processor 510 detects that the electronic device 500 is moving forward, the processor 510 may reduce the size of an avatar being displayed on the external electronic device 104.

According to an embodiment, the processor 510 may determine a position of the avatar being displayed based on the changed surrounding environment image. The processor 510 may detect a movement of the electronic device 500 based on the changed surrounding environment image. The processor 510 may determine a position of the avatar being displayed on the external electronic device 104 in response to the detected movement of the electronic device 500. For example, the processor 510 may detect that a size of an object located at the left side of the electronic device 500 decreases on the changed surrounding environment image. The processor may detect that the electronic device moves to the right in response to decrease in the size of the object. In the case that the processor 510 detects the movement of the electronic device moving to the right, the processor 510 may change the position of the avatar being displayed on the external electronic device 104 to the right (or left). For example, the processor 510 may detect that the size of an object located at the left side of the electronic device 500 increases on the changed surrounding environment image. The processor may detect that the electronic device moves to the left in response to an increase in the size of the object. In the case that the processor 510 detects that the electronic device is moving to the left, the processor may change the position of the avatar displayed on the external electronic device 104 to the left (or right). It is only an example that the processor 510 detects the movement of the electronic device 500 using a change in the size of an object located in front (or left) of the electronic device 500, and the processor 510 may not necessarily detect the movement of the electronic device 500 based on a change in the size of the object in front (or left). The processor 510 may detect the movement of the electronic device 500 based on a size and/or a relative position of an object located in one direction on a three-dimensional plane. According to an embodiment, the processor 510 may identify a position of the electronic device 500 based on the surrounding environment image, and detect the movement of the electronic device 500 in response to the changed surrounding environment image.

According to an embodiment, the processor 510 may determine a surrounding environment image acquired through the second camera 550 as a first image for determining an avatar at the time point of connecting communication with the external electronic device 104. The first image may be an image acquired by the second camera 550 and transmitted to the processor 510 before and after the time point of connecting communication with the external electronic device 104, and the processor 510 may temporarily store the first image received from the second camera 550 in the memory 520 and compare the first image and a surrounding environment image changed from the first image. The processor 510 may determine characteristics (e.g., a size of the avatar, a position of the avatar, an angle of the avatar) of the avatar being displayed using the result of the comparison.

According to an embodiment, the processor 510 may transmit the created avatar to the external electronic device 104 while connecting communication. The transmitting avatar may include information related to the avatar, including a size of the avatar, a direction of movement of the avatar (or a position on the display of the external electronic device 104), the degree of movement of the avatar, a position of the electronic device 500, and/or an expression of the avatar. For example, the avatar or characteristics of the avatar may vary according to images acquired by the first camera 540 and the second camera 550, and the processor 510 may continue to update the avatar using images received from the first camera 540 and the second camera 550. The processor 510 may continue to transmit the updated avatar to the external electronic device 104.

According to an embodiment, the processor 510 may determine an amount of movement of the electronic device 500 based on the first image and a changed surrounding environment image according to the movement of the electronic device 500. The processor 510 may identify a position of the electronic device 500 based on the surrounding environment image, and identify an amount of movement of the electronic device 500 based on a changed surrounding environment image according to the movement of the electronic device 500.

For example, the amount of movement of the electronic device 500 may refer to the degree of difference between the position of the electronic device 500 in the first image and the position of the electronic device 500 in the changed surrounding environment image according to the movement of the electronic device 500. The amount of movement used in the disclosure may be a value referring to an amount of change in the position between an initial position and a final position of the electronic device 500. The electronic device 500 may move in response to the movement of the user while connecting communication, and the surrounding environment image may be changed while connecting communication. As the surrounding environment image is changed, the position of the electronic device 500 on the surrounding environment image may be changed, and the processor 510 may determine the degree to which the position of the electronic device 500 is changed as the amount of movement of the electronic device 500. For example, the amount of movement of the electronic device 500 may be determined in response to the amount of movement of the user in a situation where the user is moving.

According to an embodiment, the processor 510 may identify an amount of movement of the electronic device using at least one sensor included in the electronic device 500.

According to an embodiment, the processor 510 may stop avatar transmission using at least one sensor. The electronic device 500 may include at least one sensor. The at least one sensor may detect whether the user is wearing the electronic device 500. For example, a sensor that tracks the user's gaze may detect that the user has taken off the electronic device 500 because the user's gaze cannot be tracked. The at least one sensor may transmit a result of detecting that the user has taken off the electronic device 500 to the processor 510. The processor 510 may stop avatar transmission in response to the user taking off the electronic device 500. The processor 510 may determine whether to stop avatar transmission based on the result detected by the at least one sensor as well as the fact that the user has taken off the electronic device 500. For example, the sensor may detect a state in which the user has preconfigured to stop avatar transmission, and the processor 510 may stop avatar transmission according to the result detected by the sensor.

According to an embodiment, the processor 510 may identify whether an amount of movement of the electronic device 500 exceeds a predetermined first value based on the changed surrounding environment image according to the movement of the electronic device 500. The processor 510 may stop avatar transmission in response to the amount of movement of the electronic device 500 exceeding the predetermined first value. The processor 510 may transmit, to the external electronic device 104, information instructing not to move the avatar being displayed by the external electronic device 104 to a predetermined specific position on the display screen (e.g., a substantial central portion on the display screen of the display) in response to the amount of movement of the electronic device 500 exceeding the predetermined first value. Hereinafter, although only a situation in which avatar transmission is stopped is described, the same may be applied to a situation in which the electronic device 500 transmits information instructing not to move the avatar being displayed by the external electronic device 104 to a predetermined specific position on the display screen (e.g., a substantial central portion on the display screen of the display).

For example, the predetermined first value may be a value for determining whether the movement of the electronic device 500 is a movement for stopping avatar transmission. The user may not want avatar transmission while performing a communication connection, and the predetermined first value may be a reference value for stopping avatar transmission when the movement of the electronic device 500 exceeds the predetermined first value.

The first value may refer to a value that may be configured by the manufacturer of the electronic device 500. However, the first value may be changed by an input from the user of the electronic device 500.

According to an embodiment, in the case that the amount of movement of the electronic device 500 exceeds the predetermined first value, the processor 510 may receive a user input determining whether to stop avatar transmission. The electronic device 500 may include at least one display, and display a pop-up for selecting whether to stop avatar transmission on the display. The electronic device 500 may include an interface unit (e.g., touch input unit) for receiving a user input. The processor may identify whether to stop avatar transmission based on a user input (e.g., voice input, gesture input detectable by a camera) input to the interface unit. The processor 510 may stop avatar transmission in response to receiving a user input instructing to stop avatar transmission. The processor 510 may not stop avatar transmission even if the amount of movement of the electronic device 500 exceeds the predetermined first value in response to receiving a user input instructing not to stop avatar transmission.

According to an embodiment, the processor 510 may stop avatar transmission in response to receiving a user input instructing to stop avatar transmission. The user input instructing to stop avatar transmission may be received through an area (e.g., physical button, touch input unit, or voice input unit) that receives a user input included in the interface unit. The processor 510 may stop avatar transmission in response to the user input instructing to stop avatar transmission input through the interface unit even if the movement amount of the electronic device 500 does not exceed the predetermined first value.

According to an embodiment, the processor 510 may transmit information related to the stop of avatar transmission to the external electronic device 104 while stopping avatar transmission (or before or after the stop of avatar transmission). The electronic device 500 may transmit, to the external electronic device 104, a signal instructing the external electronic device 104 to stop outputting the avatar on a display of the external electronic device 104. The processor 510 may transmit, to the external electronic device 104, a content to replace (or replacing) the avatar on the display of the external electronic device 104 and information instructing to output the content. The content to replace the avatar may include content displayed on the display of the external electronic device while the avatar output is stopped (e.g., a graphic object reflecting information generated based on an image of the user's face captured by the first camera (540)). The processor 510 may transmit, to the external electronic device 104, information instructing not to move the avatar to a predetermined specific position on a display screen of the display (e.g., a substantial central portion of the display screen of the display) even if the avatar displayed on the display of the external electronic device 104 leaves the screen according to a movement of the electronic device 500.

According to an embodiment, even while not transmitting an avatar, the processor 510 may acquire images using the first camera 540 and the second camera 550; thus, the processor 510 may transmit information generated based on the first camera 540 and the second camera 550 to the external electronic device 104.

For example, the processor 510 may transmit a graphic object that does not reflect the movement of the electronic device 500 according to the movement of the user to the external electronic device 104 while stopping avatar transmission. For example, the processor 510 may transmit a graphic object that reflects information generated based on an image including the user's face acquired by the first camera 540 while stopping avatar transmission.

According to an embodiment, in the case that the processor 510 stops avatar transmission, the processor 510 may store a second image, which is a surrounding environment image at a time point when avatar transmission is stopped, in the memory.

According to an embodiment, the processor 510 may identify whether the electronic device is at the position where avatar transmission has stopped based on the second image and the changed surrounding environment image according to the movement of the electronic device while stopping avatar transmission. The processor 510 may compare the surrounding environment image acquired by the second camera with the second image while stopping avatar transmission to identify whether the electronic device is at the position where avatar transmission has stopped. In the case that at least a partial area included in the surrounding environment image acquired by the second camera while stopping avatar transmission matches at least a partial area of the second image, the processor 510 may determine that the electronic device is at the position where avatar transmission has stopped. According to an embodiment, in the case that the electronic device is within a certain distance from the position where avatar transmission has stopped, the electronic device may determine that the electronic device is at the position where avatar transmission has stopped.

In the case that the electronic device is at a position where avatar transmission has stopped, the processor 510 may transmit the avatar to the external electronic device.

According to an embodiment, the processor 510 may identify whether a movement amount of the electronic device, which is identified based on the first image, which is a surrounding environment image at a time point of initiating communication connection, and the changed surrounding environment image according to the movement of the electronic device, while stopping avatar transmission, is less than a predetermined second value. In response to the fact that a movement amount of the electronic device 500 is less than the predetermined second value, the processor 510 may transmit the avatar to the external electronic device 104. In the case that a movement amount of the electronic device 500 becomes less than the predetermined second value and that the avatar is transmitted again, the processor 510 may change the first image. For example, even if the electronic device 500 does not return to the position where communication was connected, in the case that a movement amount of the electronic device 500 becomes less than the second value and that the avatar is transmitted again, the processor 510 may configure a surrounding environment image acquired at the position where the avatar is transmitted again as the first image.

For example, the predetermined second value may be a value for determining whether the movement of the electronic device 500 is a movement for retransmitting the avatar. The user may want to transmit the avatar while stopping avatar transmission, and the predetermined second value may be a reference value for retransmitting the avatar when the movement amount of the electronic device 500 is less than the predetermined second value. For example, the second value may be determined as a value less than or equal to the first value.

According to an embodiment, the second value may refer to a value that may be configured by the manufacturer of the electronic device 500. However, the second value may be changed by an input from the user of the electronic device 500. The processor 510 may receive a user input instructing to transmit the avatar while stopping avatar transmission. The user input instructing to transmit the avatar may be received through an area (e.g., physical button, touch input unit, or voice input unit) that receives a user input included in the interface unit. The processor 510 may retransmit the avatar in response to the user input instructing to transmit the avatar input through the interface unit. In the case that the processor 510 receives the user input instructing to transmit the avatar and retransmits the avatar, the processor 510 may change the first image. For example, in the case that the processor 510 retransmits the avatar, the processor 510 may configure a surrounding environment image acquired at the retransmitting position as the first image.

According to an embodiment, the processor 510 may learn a pattern in which the user instructs to stop avatar transmission or retransmit the avatar based on an input instructing the user to stop avatar transmission and an input instructing the user to retransmit the avatar. The processor may generate a model that predicts the user's pattern based on the user's input. The processor may identify a change in the user's state using the first camera, the second camera, and at least one sensor, and predict whether the user instructs to stop avatar transmission or retransmit the avatar based on the change in the user's state. The processor may stop avatar transmission in response to a predicted user input instructing to stop avatar transmission. The processor may retransmit the avatar in response to a predicted user input instructing to retransmit the avatar.

According to an embodiment, the external electronic device 104 may perform a communication connection with the electronic device 500 using at least one communication circuit 530. The external electronic device 104 may perform a voice call and/or a video call through communication connection with the electronic device 500.

According to an embodiment, the external electronic device 104 may receive an avatar created and transmitted by the electronic device 500. The external electronic device 104 may display the received avatar on the display of the external electronic device 104 while performing a video call with the electronic device 500.

According to an embodiment, the external electronic device 104 may receive an avatar created by the electronic device 500 and display the avatar on the display of the external electronic device 104. The external electronic device 104 may receive an avatar continuously transmitted by the electronic device 500 and update the avatar output on the display. The external electronic device may receive information reflecting the change point position transmitted by the electronic device. For example, the external electronic device 104 may receive information for updating the face of the avatar corresponding to the user's face included in an image acquired by the first camera 540 of the electronic device. The external electronic device 104 may display an avatar according to the received change point position on the display. The avatar according to the received change point position may refer to an avatar newly created by the external electronic device 104 reflecting the change point position or an avatar that reflects the change point position in the avatar being displayed. According to an embodiment, a position of a change point corresponding to an eyelid on a user's face image acquired by the first camera may be changed in response to a user's blinking motion. The electronic device may transmit a position of the change point corresponding to the eyelid changed as the user blinks to the external electronic device 104. The external electronic device 104 may update (or adjust) the position of the eyelid of the avatar's face in response to the position of the change point corresponding to the eyelid.

The external electronic device 104 may adjust a position of the avatar to a specific position on the screen (e.g., a position of a substantial center portion of the display) when the movement of the avatar is completed according to the movement of the user of the electronic device 500.

According to an embodiment, the external electronic device 104 may change the avatar display according to information transmitted by the electronic device 500. For example, in a situation where the electronic device 500 stops avatar transmission, the external electronic device 104 may display information indicating that the user of the electronic device 500 is in a situation that does not want to transmit the avatar on the display of the external electronic device 104. For example, in a situation where the electronic device 500 stops avatar transmission, the external electronic device 104 may display an avatar that does not change according to the movement of the electronic device 500 on the display of the external electronic device 104.

FIGS. 6A, 6B, and 6C are diagrams illustrating an avatar created by an electronic device according to an embodiment of the disclosure. For example, FIG. 6A is a diagram illustrating an electronic device 600 at a time point when communication is connected with an external electronic device. For example, FIGS. 6B and 6C are diagrams illustrating an avatar created by an electronic device according to an embodiment of the disclosure.

A user 602 of the electronic device 600 may perform a video call with a user of an external electronic device 410 (e.g., the external electronic device 104 of FIG. 5) in a state of wearing the electronic device 600. A space where the electronic device 600 performs a video call with the external electronic device 410 is referred to as a surrounding environment 601.

The electronic device 600 may include a first camera (e.g., the first camera 540 of FIG. 5) and a second camera (e.g., the second camera 550 of FIG. 5). The first camera (e.g., the first camera 540 of FIG. 5) may include at least one camera for acquiring an image of a user's face 620. The second camera (e.g., the second camera 550 of FIG. 5) may include at least one camera for acquiring a surrounding environment image 601 of the electronic device 600.

With reference to FIG. 6A, the electronic device 600 may acquire an image of the user's face 620 while the user wears the electronic device. The image including the user's face may refer to an image of the user's face 620 captured by the first camera (e.g., the first camera 540 of FIG. 5). The electronic device 600 may acquire an image of not only the user's face 620 but also a part of a body of the user 602. The electronic device 600 may acquire an image of the user's face 620 changed according to a movement on the user's face 620. The first camera may operate continuously as well as temporarily. For example, the first camera may track a gaze of the user 602 to identify a movement of pupils of the user 602. The first camera 540 may monitor not only the gaze but also other body parts (e.g., lips). The first camera 540 may include a plurality of cameras. For example, the first camera 540 may include a camera that detects a part of the user's body and detect movements on the user's body (e.g., face, arms, legs, torso, fingers) that control the avatar. The processor 510 may detect movements on the user's body based on the first camera 540 and control an avatar according to the movements on the user's body. For example, the processor 510 may stop avatar transmission or transmit the avatar in response to detecting a preconfigured movement on the user's body. However, it should be understood that the first camera 540 is not limited to detecting the user's body. The first camera 540 may capture (or detect) an area other than the user's body.

With reference to FIG. 6B, the electronic device 600 may acquire a surrounding environment image while the user wears the electronic device 600. The electronic device 600 may determine characteristics (a position of the avatar, a size of the avatar, an angle of the avatar) of the avatar being displayed based on surrounding environment images 610 and 615 thereof while the electronic device 600 performs a communication connection with the external electronic device 410. The surrounding environment 601 may be a space where the electronic device 600 is located. The surrounding environment images 610 and 615 may be an image for rendering a space where the electronic device 600 is located or a rendered image. The surrounding environment images 610 and 615 may be an image of a space where the user 602 wearing the electronic device 600 is located, or may be an image that does not include the user 602.

The electronic device 600 may create an avatar, which is a graphic object representing the user 602 based on an image of the user's face 620 and the changed surrounding environment images 610 and 615 according to the movement thereof. The electronic device 600 may create an avatar in the case of performing a video call. The video call may include all types of communication methods based on a wired/wireless communication method. The processor may reflect a face of the avatar corresponding to the user's face to the created avatar based on an image including the user's face acquired by the first camera. The processor may reflect characteristics (e.g., a size of the avatar, a position of the avatar, an angle of the avatar) of the avatar being displayed based on the changed surrounding environment image acquired by the second camera to the created avatar.

According to an embodiment, the electronic device 600 may determine a face of the avatar based on the image of the user's face 620 acquired using the first camera. For example, the electronic device 600 may identify that the user 602 has performed an eye blinking action using the image acquired by the first camera, and determine so that an avatar created by the electronic device 600 blinks eyes thereof.

According to an embodiment, the electronic device 600 may determine a size of the avatar and a position at which the avatar is displayed on the display of the external electronic device 410 based on the surrounding environment images 610 and 615 acquired using the second camera. The electronic device 600 may determine the surrounding environment image 610 acquired through the second camera as the first image 610 for determining the avatar while the user wears the electronic device 600. The electronic device 600 may compare the first image 610 and the surrounding environment image 615 changed from the first image according to the movement of the electronic device 600. The electronic device 600 may determine a size of the avatar and a position at which the avatar is displayed on the display of the external electronic device 410 using the result of the comparison.

For example, when the user 602 moves to the right (e.g., in the +y direction), the surrounding environment image 615 acquired by the second camera may be changed. The changed surrounding environment image 615 may be a changed surrounding environment image acquired at a position where the electronic device 600 has moved to the right (e.g., in the +y direction). The electronic device 600 may detect the movement of the electronic device based on the changed surrounding environment image 615. The electronic device 600 may be configured to display an avatar 635 moved to the left on the display according to the detected rightward movement thereof. Because the same may be applied to the leftward movement of the user 602, a related description is omitted.

For example, when the user 602 moves backward (e.g., in the +x direction), a surrounding environment image 616 acquired by the second camera may be changed. The changed surrounding environment image 616 may be a changed surrounding environment image acquired at a position where the electronic device 600 has moved backward. The electronic device 600 may detect the movement of the electronic device based on the changed surrounding environment image 616. The electronic device 600 may be configured to display an avatar 636 whose size is reduced according to the detected backward movement thereof. Because the same may be applied to the forward movement of the user 602, a related description is omitted.

According to an embodiment, the electronic device 600 may determine characteristics of the avatar being displayed based on a user input indicating a size of the avatar and a position where the avatar is displayed on the display of the external electronic device 410. The user input may be received through an area (e.g., physical button, touch input unit, or voice input unit) that receives a user input included in the interface unit of the electronic device 600. The user input may be received through a control device that controls the electronic device. For example, the control device may refer to an accessory and/or a controller that performs communication with the electronic device.

According to an embodiment, the electronic device 600 may transmit at least one avatar among created avatars 630, 635, and 636 or data corresponding to the avatar to the external electronic device 410 while connecting communication. The transmitting avatar may include information related to the avatar, including a size of the avatar, a direction of movement (or a position on the display of the external electronic device 410) of the avatar, the degree to which the avatar has moved, a position of the electronic device 600, and/or an expression of the avatar. The external electronic device 410 may receive an avatar created and transmitted by the electronic device 600. The external electronic device 410 may display the received avatar on the display thereof while performing a video call with the electronic device 600.

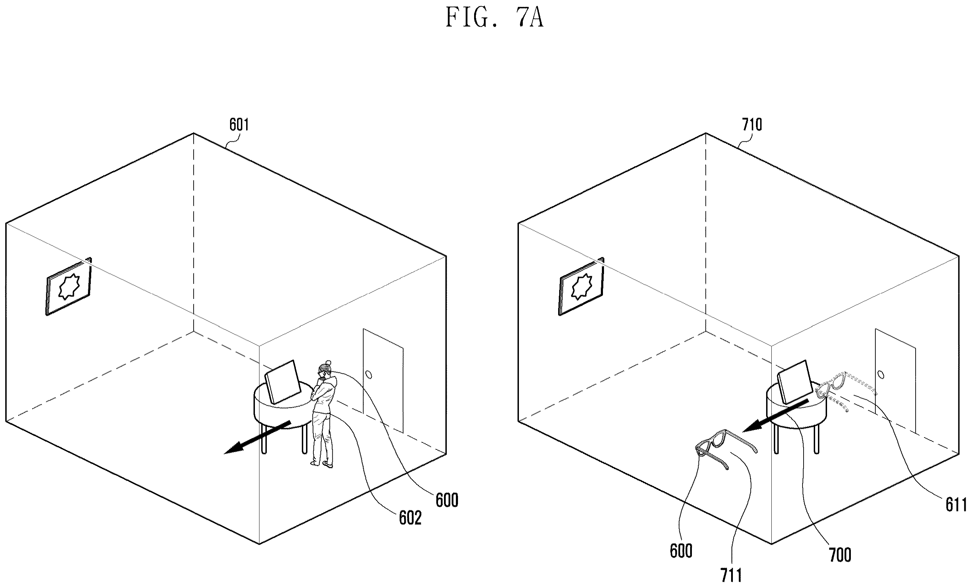

FIG. 7A is a diagram illustrating an amount of movement of an electronic device according to an embodiment of the disclosure.

According to an embodiment, the user may move in a state of wearing the electronic device 600 that performs a communication connection with the electronic device 104. For example, the user 602 may move to a different position within a surrounding space 601 in order to change a position that performs a video call. In the case that the user 602 moves, the electronic device 600 may identify a movement amount 700 of the electronic device 600 according to the movement of the user 602.

According to an embodiment, the electronic device 600 may determine a movement amount 700 of the electronic device 600 based on the first image 610 and a changed surrounding environment image 710 according to the movement of the electronic device 600. The electronic device 600 may identify positions 611 and 711 of the electronic device 600 based on the surrounding environment images 610 and 710, and identify a movement amount 700 of the electronic device 600 based on the changed position 711 of the electronic device 600 according to the movement of the electronic device 600. For example, the movement amount 700 of the electronic device 600 may be a value representing the difference between the position 611 of the electronic device 600 in the first image 610 and the position 711 of the electronic device 600 in the changed surrounding environment image 710 according to the movement of the electronic device 600. Because the electronic device 600 may continue to move in response to the movement of the user while connecting communication, the surrounding environment image 710 may be continuously changed while connecting communication. As the surrounding environment image 710 is changed, the position 711 of the electronic device 600 on the surrounding environment image 710 may be changed from the position 611 of the electronic device 600 on the basic image 610, and the electronic device 600 may determine the degree to which the position of the electronic device 600 is changed as the movement amount 700 thereof.

According to an embodiment, in the case that the movement amount 700 of the electronic device 600 exceeds the predetermined first value, the electronic device 600 may stop avatar transmission. For example, the predetermined first value may be a value for determining whether the movement of the electronic device 600 is a movement for stopping avatar transmission. The predetermined first value may be a reference value for stopping avatar transmission when the movement of the electronic device 600 exceeds the predetermined first value.

According to an embodiment, in the case that the movement amount 700 of the electronic device 600 exceeds the predetermined first value, the electronic device 600 may transmit, to the external electronic device 104, information instructing not to move the avatar being displayed by the external electronic device 104 to a predetermined specific position on the display (e.g., a substantially central portion on the display screen of the display).

According to an embodiment, the electronic device 600 may prevent a situation in which an unintended avatar is displayed on the external electronic device 104 even if the electronic device 600 moves in response to the movement of the user because the electronic device 600 stops avatar transmission based on the movement amount 700 thereof. The electronic device 600 may prevent an avatar from being continuously displayed on the display of the external electronic device 104 in a situation in which the user of the electronic device 600 does not want it.

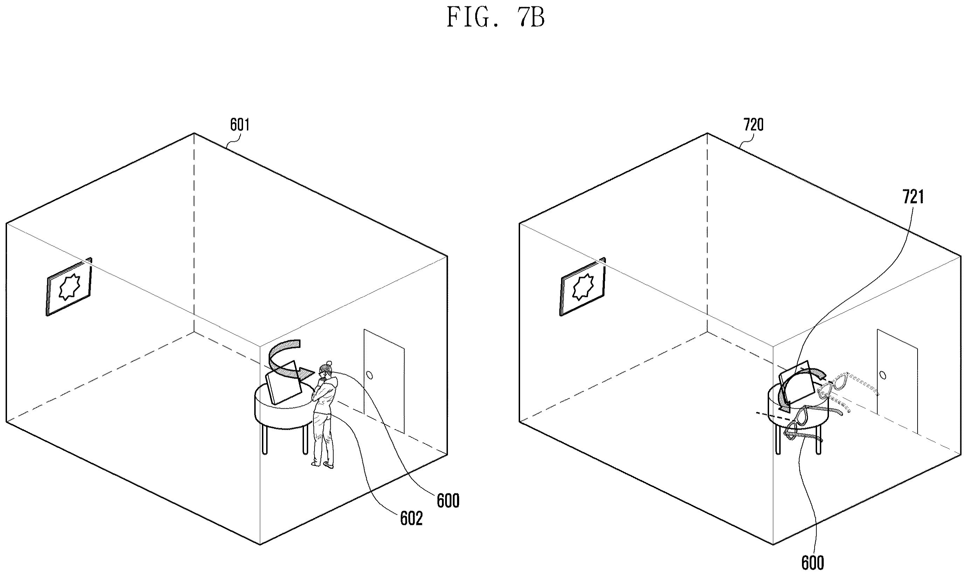

FIG. 7B is a diagram illustrating an amount of rotation of an electronic device according to an embodiment of the disclosure.

According to an embodiment, the user 602 may rotate in a state of wearing the electronic device 600 that performs a communication connection with the external electronic device 104. For example, the user 602 may rotate while maintaining a position (e.g., the position 611 of the electronic device at the time point of connecting communication in FIG. 7A) in order to change an angle that performs a video call. In the case that the user 602 rotates, the electronic device 600 may identify a rotation amount 721 thereof according to the rotation of the user 602.

According to an embodiment, the electronic device 600 may determine a rotation amount 721 thereof based on a first image and a changed surrounding environment image 720 according to the rotation thereof. For example, the rotation amount 721 of the electronic device 600 may be a value representing a position of the electronic device 600 in the first image and a rotation angle of the electronic device 600 in the changed surrounding environment image 720 according to the rotation of the electronic device 600. Because the electronic device 600 may rotate in response to the rotation of the user 602 while connecting communication, the surrounding environment image 720 may be changed while connecting communication. As the surrounding environment image 720 is changed, the electronic device 600 on the surrounding environment image 720 may be rotated compared to the electronic device 600 on the first image 610, and the electronic device 600 may determine the degree to which the electronic device 600 is rotated as the rotation amount 721 thereof. According to an embodiment, the electronic device 600 may identify the degree to which at least one object included in the surrounding environment image is rotated, and determine the rotation amount 721 thereof based on the degree to which the object is rotated.

According to an embodiment, the electronic device 600 may detect a rotation angle thereof using at least one sensor (e.g., six-axis sensor). The electronic device 600 may determine a rotation amount 721 thereof based on the rotation angle thereof.

According to an embodiment, in the case that the rotation amount 721 of the electronic device 600 exceeds a predetermined angle, the electronic device 600 may stop avatar transmission. In the case that the rotation amount 721 of the electronic device 600 exceeds the predetermined angle, the electronic device 600 may transmit, to the external electronic device 410, information instructing not to move the avatar being displayed by the external electronic device 410 to a predetermined specific position on the display (e.g., a substantial central portion on the display screen of the display).

For example, the electronic device 600 may stop avatar transmission in a situation satisfying both a condition in which the amount of movement of the electronic device 600 exceeds the predetermined first value and a condition in which the rotation amount 721 of the electronic device 600 exceeds the predetermined angle. Alternatively, when both a condition in which the amount of movement of the electronic device 600 exceeds the predetermined first value and a condition in which the rotation amount 721 of the electronic device 600 exceeds the predetermined angle are satisfied, the electronic device 600 may transmit, to the external electronic device 410, information instructing not to move the avatar being displayed by the external electronic device 410 to a predetermined specific position on the display (e.g., a substantial central portion on the display screen of the display).

According to an embodiment, the electronic device 600 may determine a speed, acceleration, and/or angular velocity thereof based on the first image and/or the changed surrounding environment image according to the rotation (or movement) thereof. The electronic device 600 may identify whether the speed, acceleration, and/or angular velocity thereof exceed(s) a predetermined value. The electronic device 600 may determine whether to transmit the avatar and whether to stop avatar transmission based on whether at least one value of the amount of movement, the amount of rotation, the speed, the acceleration, or the angular velocity thereof exceeds a predetermined value (e.g., a first value, a second value). The predetermined value may be configured by the manufacturer separately from the first value and the second value, and be changed by the user.

According to an embodiment, the electronic device 600 may include at least one sensor (e.g., IMU sensor) (not illustrated). The electronic device 600 may detect an amount of movement, an amount of rotation, a speed, and an angular velocity thereof using the at least one sensor. The electronic device 600 may stop avatar transmission based on the detected result using the at least one sensor.

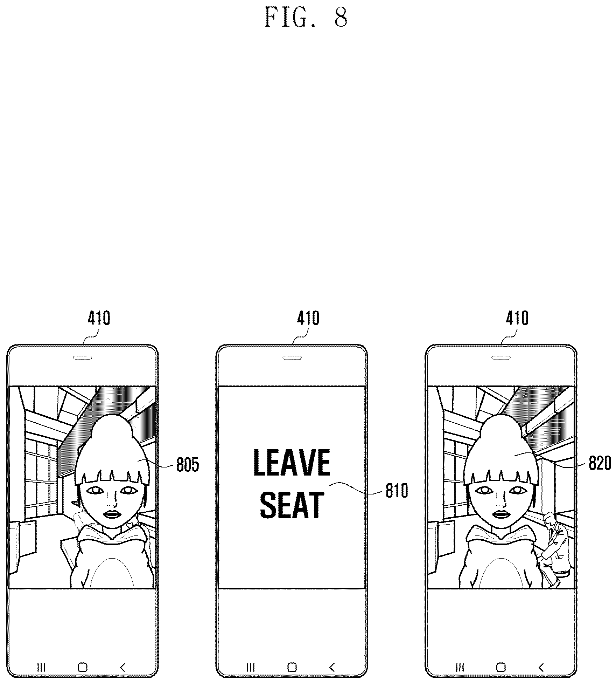

FIG. 8 is a diagram illustrating an avatar displayed on an external electronic device according to various embodiments of the disclosure.

According to an embodiment, the electronic device 600 may change the position at which an avatar is displayed on the display of the external electronic device 410 based on a changed surrounding environment image (e.g., the surrounding environment images 710 and 720 of FIG. 7) according to the movement thereof. The external electronic device 410 may display an avatar 805 disposed at the changed position of the display of the external electronic device 410 according to the movement of the electronic device 600 on the display.

According to an embodiment, the external electronic device 410 may adjust a position of the avatar to a specific position on the display screen (e.g., a substantial central portion on the display screen of the display) when the movement of the avatar according to the movement of the electronic device 600 is completed. When the movement of the electronic device 600 is stopped, the external electronic device 410 may move the avatar while displaying on the side surface of the display thereof to a specific position on the display screen of the display (e.g., a substantial central portion on the display screen of the display). The display screen of the display may be displayed in a partial area on the display. It should be understood that the specific position where the avatar is displayed refers to a specific position on the display screen; and does not refer a specific position on the display. For example, even if the avatar is displayed at the center of the display screen, the avatar may not be displayed at a central portion of the display.

According to an embodiment, in the case that the amount of movement of the electronic device 600 (e.g., the movement amount 700 of the electronic device of FIG. 7) exceeds the predetermined first value, the electronic device 600 may not transmit the avatar. Because the external electronic device 410 cannot receive the avatar, the external electronic device 410 cannot display an avatar 805 on the display.

According to an embodiment, in the case that a movement amount of the electronic device 600 (e.g., a movement amount 700 of the electronic device of FIG. 7) exceeds the predetermined first value, the electronic device 600 may transmit, to the external electronic device 410, information instructing not to move an avatar being displayed by the external electronic device 410 to a specific position on a display screen of the display (e.g., a substantial central portion on the display screen of the display). Because the external electronic device 410 does not move the avatar to a specific position on the display screen (e.g., a substantial central portion on the display screen of the display), the avatar may disappear on the display according to movement of the electronic device 600.

According to an embodiment, the electronic device 600 may transmit, to the external electronic device 410, information instructing not to transmit the avatar or not to move the avatar being displayed by the external electronic device 410 to a specific position on the display screen of the display (e.g., a substantially central portion on the display screen of the display) in response to receiving a user input instructing to stop avatar transmission.

The external electronic device 410 may display, on the display, information 810 indicating a situation in which the avatar cannot be displayed in response to the avatar disappearing on the display.

The electronic device 600 may acquire a user's face image and a surrounding environment image using a first camera (e.g., the first camera 540 of FIG. 5) and a second camera (e.g., a second camera 550 of FIG. 5) while the user wears the electronic device 600. Because the electronic device 600 may acquire a user's face image and a surrounding environment image even when the electronic device 600 does not transmit an avatar, the electronic device 600 may transmit information generated based on the first camera (e.g., the first camera 540 of FIG. 5) and the second camera (e.g., the second camera 550 of FIG. 5) to the external electronic device 410. In the case that the movement amount 700 of the electronic device 600 exceeds the predetermined first value, the electronic device 600 may stop avatar transmission and transmit information generated based on the first camera (e.g., the first camera 540 of FIG. 5) and the second camera (e.g., the second camera 550 of FIG. 5) to the external electronic device 410 in response to stopping avatar transmission.

For example, the electronic device 600 may transmit information based on an image including a user's face acquired by the first camera (e.g., the first camera 540 of FIG. 5) while stopping avatar transmission, and the external electronic device 410 may display a graphic object according to information based on the image including the user's face on the display. The graphic object according to an embodiment may be a graphic object 820 that does not reflect the movement of the electronic device 600. The graphic object 820 displayed on the external electronic device 410 may be changed in response to a change in the user's face but may not be changed in response to the movement of the electronic device 600.

For example, the electronic device 600 may identify change points (e.g., eyes, nose, mouth) of the user's face in an image including the user's face acquired by the first camera (e.g., the first camera 540 of FIG. 5). The change points may refer to at least one point on the user's face that may be configured based on the user's face. The electronic device 600 may identify a position of change points for each image acquired by the first camera (e.g., the first camera 540 of FIG. 5) and generate information updating an avatar's face corresponding to the user's face. For example, the electronic device 600 may generate information that renders the user's face.

The electronic device 600 may transmit information reflecting a predetermined change point position for each image acquired by the first camera (e.g., the first camera 540 of FIG. 5) to the external electronic device. For example, the electronic device 600 may transmit information for updating a graphic object corresponding to the user's face for each image acquired by the first camera (e.g., the first camera 540 of FIG. 5) to the external electronic device, and the external electronic device may display a graphic object according to the received change point position on the display. According to an embodiment, the position of a change point corresponding to an eyelid on an image of the user's face acquired by the first camera may be changed in response to a motion of the user blinking his or her eyes. The electronic device 600 may transmit a position of the change point corresponding to the eyelid changed as the user blinks his or her eyes to the external electronic device. The external electronic device may update (or adjust) the position of the eyelid of the graphic object's face in response to the position of the change point corresponding to the eyelid.

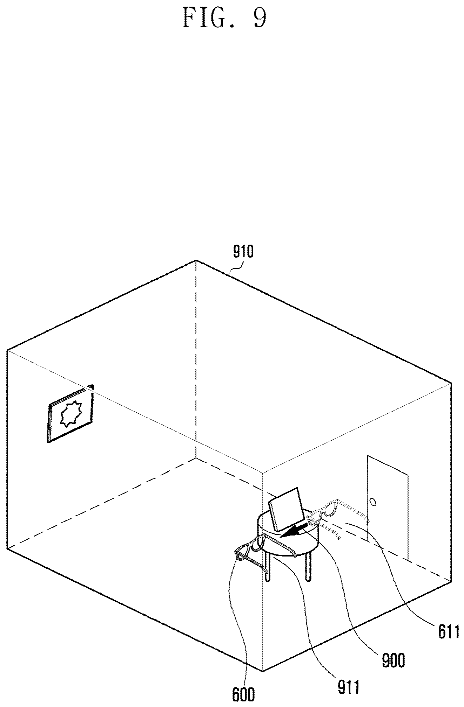

FIG. 9 is a diagram illustrating conditions in which an electronic device 600 transmits an avatar according to an embodiment of the disclosure.

Even while the electronic device 600 stops avatar transmission, the electronic device 600 may acquire a surrounding environment image 910 using the second camera (e.g., the second camera 550 of FIG. 5). Even while the electronic device 600 stops avatar transmission, the electronic device 600 may identify (or determine) a movement amount 900 thereof based on a changed surrounding environment image 910 according to the movement thereof. The movement amount 900 of the electronic device 600 may be determined based on the first image 610 at the time point of communication connection and the changed surrounding environment image 910, and a value thereof may not be initialized even if avatar transmission is stopped. The electronic device 600 may identify positions 611 and 911 thereof based on the surrounding environment images 610 and 910, and identify a movement amount 900 thereof based on the changed position 911 of the electronic device 900 according to the movement thereof. For example, the movement amount 900 of the electronic device 600 may be a value representing the difference between the position 611 of the electronic device 600 in the first image 610 and the position 911 of the electronic device 600 in the changed surrounding environment image 910 according to the movement thereof.

According to an embodiment, even if the movement amount 900 of the electronic device 600 becomes less than the first value while stopping avatar transmission, the electronic device 600 may not retransmit the avatar. Because the condition in which the electronic device 600 stops avatar transmission and the condition in which the electronic device 600 retransmits the avatar may not match, the electronic device 600 may determine whether to retransmit the avatar based on a separate condition (e.g., the condition that the movement amount 900 of the electronic device 600 is less than the second value).

According to an embodiment, the electronic device 600 may identify whether the movement amount 900 of the electronic device 600 is less than the predetermined second value while stopping avatar transmission. The electronic device 600 may transmit the avatar to the external electronic device 410 in response to the movement amount 900 of the electronic device 600 being less than the predetermined second value. For example, the predetermined second value may be a value for determining whether the movement of the electronic device 600 is a movement for retransmitting the avatar. The predetermined second value may be a reference value for retransmitting the avatar when the movement amount 900 of the electronic device 600 is less than the predetermined second value.

According to an embodiment, in the case that the movement amount 900 of the electronic device 600 becomes less than the predetermined second value and retransmits the avatar, the electronic device 600 may change the first image (e.g., the first image 610 of FIG. 6). For example, even if the electronic device 600 does not return to the position where communication was connected, the electronic device 600 may retransmit the avatar when the movement amount 900 of the electronic device 600 becomes less than the second value. The electronic device 600 may configure a surrounding environment image (e.g., 910) acquired at the position where the avatar is retransmitted as a first image. As the first image is changed, the electronic device 600 may determine characteristics at which the avatar is displayed (a size of the avatar and a position at which the avatar is displayed on the display of the external electronic device 410) based on the reconfigured reference image (e.g., the reference image 910). The size of the avatar and the position where the avatar is displayed on the display of the external electronic device 410 are described with reference to FIG. 6; thus, related contents are omitted in FIG. 9.

According to an embodiment, in the case that the movement amount 900 of the electronic device 600 is less than the predetermined second value and retransmits the avatar, the electronic device 600 may not change the first image. The avatar retransmitted by the electronic device 600 may be an avatar created based on the first image (e.g., the first image 610 of FIG. 6) at the time point of communication connection. For example, the electronic device 600 may display, on the display included in the electronic device 600, a pop-up for receiving a user input on whether to change the first image. The electronic device 600 may determine whether to change the first image based on the user input.

According to an embodiment, the electronic device 600 may identify an amount of movement (not illustrated) thereof based on the position of the electronic device 600 that has stopped avatar transmission as well as the position of the electronic device 600 that has connected the video call. According to an embodiment, the electronic device 600 may store the position where avatar transmission has stopped and calculate an amount of movement (not illustrated) of the electronic device 600 from the position where avatar transmission has stopped. In the case that an amount of movement (not illustrated) of the electronic device 600 from the position where avatar transmission has stopped is less than a predetermined value, the electronic device 600 may transmit the avatar to the external electronic device 410. The electronic device 600 calculating an amount of movement (not illustrated) thereof may include calculating based on position information thereof at the position where avatar transmission has stopped, a SLAM map, and a surrounding environment image.

According to an embodiment, in the case that the electronic device 600 stops avatar transmission in response to the movement amount of the electronic device 600 exceeding the first value, the electronic device 600 may store information related to a departure position thereof. The information related to the departure position of the electronic device 600 may include a surrounding environment image of the electronic device 600, position information of the electronic device 600, and a simultaneous localization and mapping (SLAM) map. The position information of the electronic device 600 may refer to information indicating a position where the electronic device 600 is located, and the electronic device 600 may acquire position information using at least one sensor or camera (e.g., second camera). The electronic device 600 may receive position information thereof from an external server. The SLAM map may refer to a map generated based on data (e.g., surrounding environment image) acquired by the electronic device 600 using a camera (e.g., second camera) or at least one sensor. The electronic device 600 may generate a SLAM map of a space in which the electronic device 600 is located, including surrounding objects (e.g., walls, obstacles).

According to an embodiment, the electronic device 600 may stop avatar transmission only in a situation where the user wants to leave, because the electronic device 600 retransmits the avatar based on the movement amount 900 thereof. The electronic device 600 may transmit the avatar as the user intends by retransmitting the avatar in a situation where the user approaches the position where communication connection was performed.

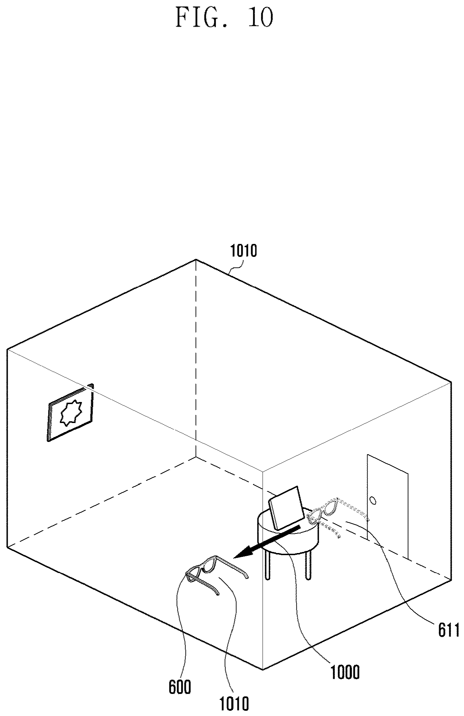

FIG. 10 is a diagram illustrating conditions in which an electronic device 600 transmits an avatar according to an embodiment of the disclosure.

Even if a movement amount of the electronic device 600 does not fall below the predetermined second value, the user may transmit the avatar. For example, the user may perform a video call using the avatar at the changed position.

The electronic device 600 may receive a user input instructing to transmit the avatar while stopping avatar transmission. The user input instructing to transmit the avatar may be received through an area (e.g., physical button, touch input unit, or voice input unit) that receives a user input included in the interface unit. The electronic device 600 may transmit the avatar again in response to the user input instructing to transmit the avatar input through the interface unit.

According to an embodiment, the electronic device 600 may acquire a surrounding environment image using the second camera even while stopping avatar transmission. In the case that the electronic device 600 receives a user input instructing to transmit the avatar and retransmits the avatar, the electronic device 600 may change the first image (e.g., the first image 610 of FIG. 6). For example, in the case that the electronic device 600 retransmits the avatar, the electronic device 600 may configure a surrounding environment image 1010 acquired at the retransmission position as the first image. As the first image is changed, the electronic device 600 may determine characteristics of the avatar being displayed (a size of the avatar and a position at which the avatar is displayed on the display of the external electronic device 104) based on the reconfigured first image 1010. Because the size of the avatar and the position at which the avatar is displayed on the display of the external electronic device 104 have been described with reference to FIG. 6, related contents are omitted in FIG. 10.

With reference to FIGS. 9 and 10, the electronic device 600 may change first images 910 and 1010 in a situation where the avatar is retransmitted. The electronic device 600 may not determine characteristics of displaying the avatar based on the first image 610 acquired at the time point of connecting communication. The electronic device 600 may transmit the avatar according to characteristics of displaying the avatar corresponding to the situation where the avatar is retransmitted.

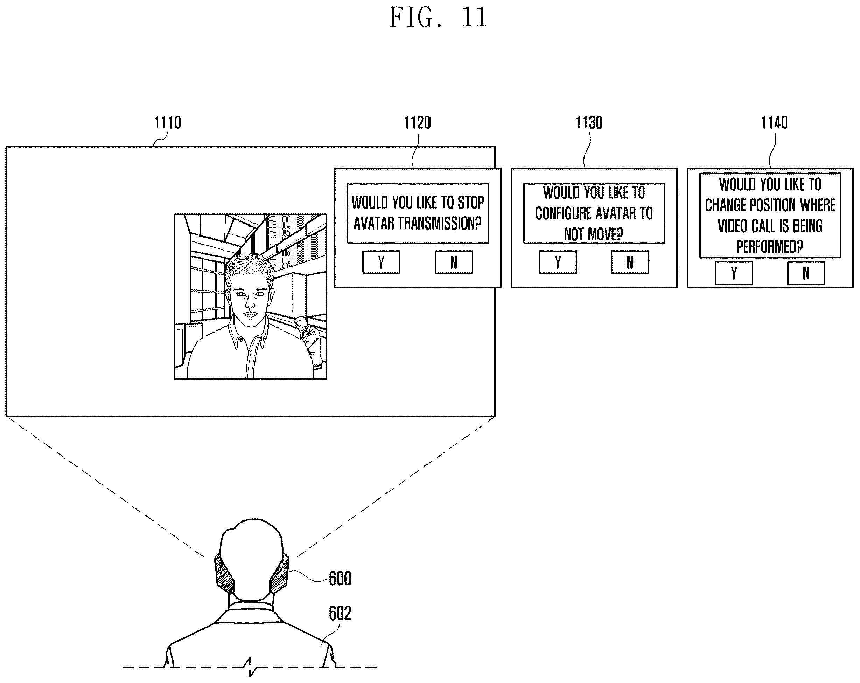

FIG. 11 is a diagram illustrating a screen displayed by an electronic device 600 according to an embodiment of the disclosure.

The electronic device 600 may include at least one display. The electronic device 600 may display a screen for making a video call with the external electronic device 104 on at least one display.

According to an embodiment, in the case that an amount of movement of the electronic device 600 (e.g., the movement amount 700 of the electronic device of FIG. 7) exceeds the predetermined first value, the electronic device 600 may receive a user input for determining whether to stop avatar transmission. The electronic device 600 may display a pop-up (or notification) 1120 for selecting whether to stop avatar transmission on at least one display. The electronic device 600 may include an interface unit (e.g., touch input unit) for receiving a user input. The processor may identify whether to stop avatar transmission based on a user input (e.g., a voice input, a gesture input detectable by a camera, a user movement acquired through a sensor) input to the interface unit. The electronic device 600 may stop avatar transmission in response to receiving a user input instructing to stop avatar transmission. In response to receiving a user input instructing not to stop avatar transmission, the electronic device 600 may not stop avatar transmission even if an amount of movement of the electronic device 600 exceeds the predetermined first value.

According to an embodiment, in the case that an amount of movement of the electronic device 600 exceeds the predetermined first value, the electronic device 600 may display, on the display, a pop-up 1130 for selecting information to transmit to the external electronic device 104. For example, the electronic device 600 may display, on the display, a pop-up for transmitting a graphic object that does not reflect the movement of the electronic device 600 according to the movement of the user. The graphic object that does not reflect the movement of the electronic device 600 may be a graphic object based on an image including the user's face acquired by the first camera.

According to an embodiment, in the case that an amount of movement of the electronic device 600 exceeds the predetermined first value, the electronic device 600 may receive a user input for determining whether the movement is a movement for changing the position for performing the video call. The electronic device 600 may display a pop-up (or notification) 1140 for selecting whether to change the position for performing the video call. In response to receiving a user input for changing the position for performing the video call, the electronic device 600 may configure a surrounding environment image acquired at the changed position as the first image when the change of the position thereof is completed.

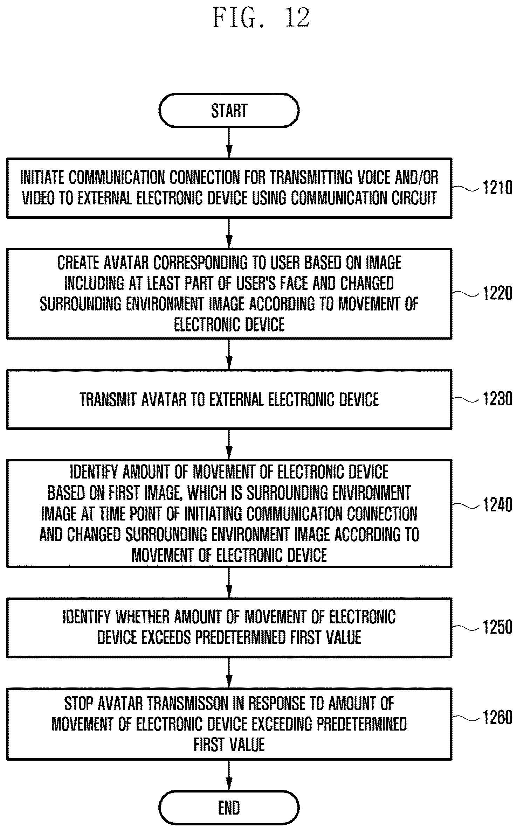

FIG. 12 is a flowchart illustrating an operation of an electronic device according to an embodiment of the disclosure.

The operations described with reference to FIG. 12 may be implemented based on instructions that may be stored in a computer recording medium or memory (e.g., the memory 520 of FIG. 5). The illustrated method (FIG. 12) may be executed by the electronic device (e.g., the electronic device 101 of FIG. 1, the electronic device 200 of FIG. 2, the head mounted display device 300 of FIG. 3, the electronic device 600 of FIG. 6) described above with reference to FIGS. 1 to 11, and the technical features described above will be omitted below. The order of each operation of FIG. 12 may be changed, some operations may be omitted, and some operations may be performed simultaneously.

In operation 1210, the electronic device may initiate (or perform) a communication connection for transmitting a voice and/or video to an external electronic device using a communication circuit. The electronic device may perform a voice call and/or a video call through communication connection with the external electronic device. In the case that the electronic device performs communication connection with the external electronic device, the electronic device may transmit at least one image to the external electronic device using the communication circuit. For example, the electronic device may transmit the user's image or an avatar representing the user to the external electronic device in a situation where a video call is performed with the external electronic device.

In operation 1220, the electronic device may create an avatar corresponding to the user based on an image including at least a part of the user's face and a changed surrounding environment image according to a movement of the electronic device.

According to an embodiment, the operation in which the electronic device creates an avatar may include an operation of reflecting information related to a face and movement of the avatar to the previously registered (or created) user's avatar. The electronic device may identify information related to a face of the avatar corresponding to an image including at least a part of the user's face and/or information related to the movement of the avatar corresponding to a changed surrounding environment image according to the movement of the electronic device. According to an embodiment, the electronic device may transmit the previously registered (or created) avatar to the external electronic device, and transmit information related to characteristics on the face of the avatar to the external electronic device so as to reflect characteristics (e.g., change points) on the face of the avatar changed corresponding to a change in the image including at least a part of the user's face. According to an embodiment, the electronic device may transmit the previously registered (or created) avatar to the external electronic device, and transmit information related to at least one of the size, position, or angle of the avatar changed corresponding to a changed surrounding environment image when the electronic device moves to the external electronic device.

According to an embodiment, the electronic device may determine a face of the avatar based on an image including the user's face acquired using the first camera. For example, the electronic device may create an avatar based on the surrounding environment image acquired using the second camera, and change (or determine) the face of the avatar by reflecting the image including the user's face.

The electronic device may determine at least one of the size, position, or angle of the avatar based on the surrounding environment image acquired using the second camera.

According to an embodiment, the electronic device may determine a first image, which is a surrounding environment image acquired through the second camera as a reference image for determining an avatar at the time point of initiating a communication connection with the external electronic device. The first image may be an image acquired by the second camera and transmitted to the electronic device before and after initiating a connection with the external electronic device, and the electronic device may temporarily store the first image received from the second camera in the memory, and compare the first image and a surrounding environment image changed from the first image. The electronic device may determine characteristics (a position of the avatar, a size of the avatar, an angle of the avatar) of the avatar being displayed using the result of the comparison.

In operation 1230, the electronic device may transmit the avatar to the external electronic device.

The transmitting avatar may include information related to the avatar including the size of the avatar, a direction of movement of the avatar (or a position on the display of the external electronic device), the degree to which the avatar moves, a position of the electronic device, and/or an expression of the avatar. For example, characteristics (a position of the avatar, a size of the avatar, an angle of the avatar) of the avatar being displayed may vary according to images acquired by the first camera and the second camera, and the electronic device may continuously update characteristics (a position of the avatar, a size of the avatar, an angle of the avatar) of the avatar being displayed using images received from the first camera and the second camera. The electronic device may continue to transmit characteristics (a position of the avatar, a size of the avatar) of the updated avatar being displayed to the external electronic device. The electronic device may identify change points (e.g., eyes, nose, mouth) in the user's face in the image including the user's face. The change point may refer to at least one point on the user's face that may be configured based on the user's face. The electronic device may transmit information reflecting a predetermined change point position for each image acquired by the first camera 540 to the external electronic device. For example, the electronic device may transmit information for updating the face of the avatar for each image acquired by the first camera 540 to the external electronic device.

The electronic device may transmit information related to accessories that may be included in the avatar to the external electronic device. Accessories that may be included in the avatar may include visual objects representing the avatar. For example, accessories may refer to clothes, glasses, shoes, and/or hats that adorn the avatar.

The electronic device may transmit at least one text corresponding to the avatar to the external electronic device. The at least one text corresponding to the avatar may include a text indicating a state of the avatar. For example, the at least one text corresponding to the avatar may include a text indicating an expression of the avatar, a position of the avatar, and/or a size of the avatar.

The electronic device may extract additional information based on images acquired through the first camera 540 and the second camera 550. The electronic device may transmit the extracted additional information to the external electronic device. The electronic device may extract additional information from images acquired through the first camera 540 and the second camera 550, even if the information does not correspond to an avatar. For example, the additional information may include information indicating the surrounding environment in which the user is located. In the case that an object is included in the surrounding environment image acquired by the second camera 550, the electronic device may extract additional information related to the object and transmit the extracted information to an external electronic device.

In operation 1240, the electronic device may identify an amount of movement of the electronic device based on a first image, which is a surrounding environment image at the time point of initiating communication connection, and a changed surrounding environment image according to the movement of the electronic device.

The electronic device may determine an amount of movement of the electronic device based on the first image and the changed surrounding environment image according to the movement of the electronic device. The electronic device may identify a position of the electronic device based on the surrounding environment image, and identify an amount of movement of the electronic device based on the changed surrounding environment image according to the movement of the electronic device. The electronic device may identify whether an amount of movement of the electronic device exceeds the predetermined first value based on the changed surrounding environment image according to the movement thereof.

For example, the electronic device may identify an initial position thereof based on the first image, and identify a position after the movement of the electronic device based on the changed surrounding environment image according to the movement thereof. The electronic device may identify an amount of movement thereof based on the distance between the initial position and a position after the movement.

According to an embodiment, the electronic device may identify an amount of movement thereof based on at least one sensor included therein.

In operation 1250, the electronic device may identify whether an amount of movement thereof exceeds a predetermined first value.

In operation 1260, the electronic device may stop avatar transmission in response to an amount of movement thereof exceeding the predetermined first value.

The electronic device may stop avatar transmission in response to a movement amount thereof exceeding the predetermined first value. The electronic device may stop avatar transmission in response to receiving a user input instructing to stop avatar transmission even if a movement amount thereof does not exceed the predetermined first value. The electronic device may transmit information related to the stop of avatar transmission to the external electronic device while stopping avatar transmission.

According to an embodiment, in the case that the electronic device stops avatar transmission in response to the movement amount thereof exceeding the first value, the electronic device may store information related to a departure position thereof. The information related to the departure position of the electronic device may include a surrounding environment image of the electronic device, position information of the electronic device, and a simultaneous localization and mapping (SLAM) map. The position information of the electronic device may refer to information indicating a position where the electronic device is located, and the electronic device may acquire position information using at least one sensor or camera (e.g., second camera). The electronic device may receive position information thereof from an external server. The SLAM map may refer to a map generated based on data (e.g., surrounding environment image) in which the electronic device acquires using a camera (e.g., second camera) or at least one sensor. The electronic device may generate a SLAM map of a space where the electronic device is located, including surrounding objects (e.g., wall, obstacle).

According to an embodiment, the electronic device may determine whether the electronic device is at a position where avatar transmission has stopped using the surrounding environment image acquired using at least one sensor or a second camera included therein. Even in the case that the electronic device is at a position less than a predetermined distance from the position where avatar transmission has stopped, the electronic device may determine that the electronic device is at a position where avatar transmission has stopped. The electronic device may identify whether the electronic device is at a position where avatar transmission has stopped using information related to the position of the electronic device as well as the surrounding environment image. The electronic device may update a SLAM map in response to the movement thereof and identify a position of the electronic device on the updated SLAM map to identify whether the electronic device is at a position where avatar transmission has stopped. In the case that the electronic device is at a position where avatar transmission has stopped, the electronic device may retransmit the avatar.

According to an embodiment, the electronic device may identify whether a movement amount of the electronic device, which is identified based on a first image, which is a surrounding environment image at the time point of initiating communication connection, and a changed surrounding environment image according to the movement of the electronic device, while stopping avatar transmission, is less than the predetermined second value. The electronic device may transmit the avatar to the external electronic device in response to a movement amount of the electronic device being less than the predetermined second value. For example, the predetermined second value may be a value for determining whether the movement of the electronic device is a movement for retransmitting the avatar. The user may want to transmit the avatar while stopping avatar transmission, and the predetermined second value may be a reference value for retransmitting the avatar when the movement amount of the electronic device is less than the predetermined second value. In the case that the electronic device retransmits the avatar because the movement amount of the electronic device is less than the predetermined second value, the electronic device may change the first image (e.g., the first image 610 of FIG. 6).

According to an embodiment, the electronic device may identify an amount of movement of the electronic device based on the position of the electronic device that connects a video call or the position of the electronic device that stops avatar transmission. According to an embodiment, the electronic device may store a position where avatar transmission has stopped and calculate an amount of movement of the electronic device from the position where avatar transmission has stopped. In the case that the amount of movement of the electronic device from the position where avatar transmission has stopped is less than a predetermined value, the electronic device may transmit the avatar to the external electronic device. The electronic device calculating an amount of movement thereof may include calculating based on position information of the electronic device at the position where avatar transmission has stopped, a SLAM map, and a surrounding environment image.

According to an embodiment, the electronic device 600 may determine a rotation amount (e.g., the rotation amount 721 of FIG. 7B) of the electronic device, a speed, an acceleration, and/or an angular velocity thereof based on the first image (e.g., the first image 610 of FIG. 6) and the changed surrounding environment image according to the rotation (or movement) thereof. The electronic device 600 may identify whether the speed, the acceleration, and/or the angular velocity thereof exceed(s) a predetermined value. The electronic device 600 may determine whether to transmit the avatar based on whether at least one value of the movement amount, the rotation amount, the speed, the acceleration, or the angular velocity thereof exceeds a predetermined value (e.g., second value). The predetermined value may be configured by the manufacturer separately from the second value and be changed by the user.

According to an embodiment, the electronic device may receive a user input instructing to transmit an avatar. In response to receiving the user input, the electronic device may determine characteristics (a position of the avatar, a size of the avatar, an angle of the avatar) of the avatar being displayed based on a changed surrounding environment image according to the movement thereof after receiving the user input. In the case of retransmitting the avatar by receiving the user input instructing to transmit the avatar, the electronic device may change the first image (e.g., the first image 610 of FIG. 6). For example, in the case that the electronic device retransmits the avatar, the electronic device may configure the surrounding environment image acquired at the retransmitting position as the first image. As the first image is changed, the electronic device may determine a size of the avatar and a position at which the avatar is displayed on the display of the external electronic device based on the reconfigured first image. The electronic device may transmit the determined avatar to the external electronic device.

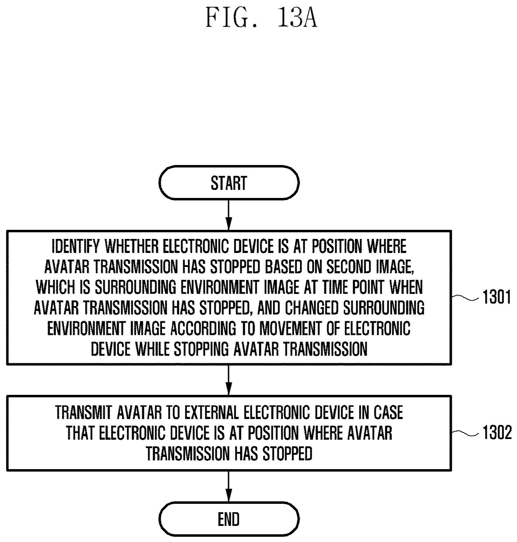

FIG. 13A is a flowchart illustrating operations of an electronic device according to an embodiment of the disclosure.

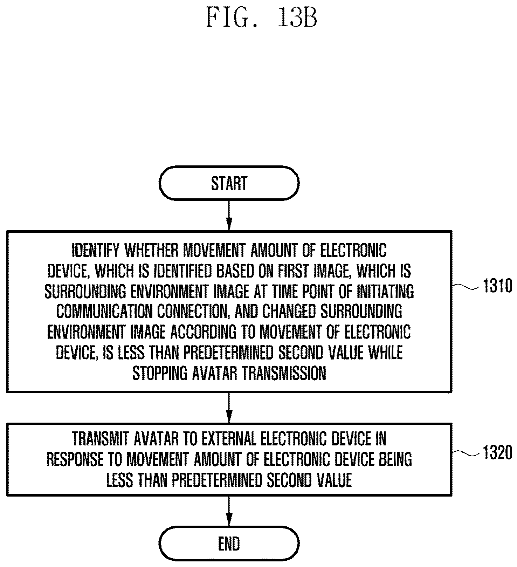

The operations described with reference to FIG. 13A may be implemented based on instructions that may be stored in a computer recording medium or memory (e.g., the memory 520 of FIG. 5). The illustrated method (FIG. 13) may be executed by the electronic device (e.g., the electronic device 101 of FIG. 1, the electronic device 200 of FIG. 2, the head mounted display device 300 of FIG. 3, the electronic device 600 of FIG. 6) described above with reference to FIGS. 1 to 11, and the technical features described above will be omitted below. The order of each operation of FIG. 13A may be changed, some operations may be omitted, and some operations may be performed simultaneously. The operation of FIG. 13A may be performed continuously with the operation of FIG. 12.

According to an embodiment, in operation 1301, the electronic device may identify whether the electronic device is at a position where avatar transmission has stopped based on a second image, which is a surrounding environment image at a time point when avatar transmission has stopped and a changed surrounding environment image according to the movement of the electronic device while stopping avatar transmission.

In the case that the electronic device stops avatar transmission, the electronic device may store, in the memory, a second image, which is a surrounding environment image at a time point at which avatar transmission is stopped.

The electronic device may compare a surrounding environment image acquired by the second camera with the second image while stopping avatar transmission to identify whether the electronic device is at a position where avatar transmission has stopped.

In the case that at least a partial area included in the surrounding environment image acquired by the second camera matches at least a partial area of the second image while stopping avatar transmission, the electronic device may determine that the electronic device is at the position where avatar transmission has stopped. According to an embodiment, in the case that the electronic device is within a certain distance from the position where avatar transmission has stopped, the electronic device may determine that the electronic device is at the position where avatar transmission has stopped.

According to an embodiment, in operation 1302, in the case that the electronic device is at the position where avatar transmission has stopped, the electronic device may transmit the avatar to the external electronic device.

FIG. 13B is a flowchart illustrating operations of an electronic device according to an embodiment of the disclosure.

According to an embodiment, in operation 1310, the electronic device may identify whether a movement amount of the electronic device, which is identified based on a first image, which is a surrounding environment image at a time point of initiating communication connection, and a changed surrounding environment image according to the movement of the electronic device, while stopping avatar transmission, is less than a predetermined second value.

According to an embodiment, the electronic device may identify a distance between a position where the electronic device initiated (or performed) a communication connection and a current position of the electronic device as the amount of movement of the electronic device.

According to an embodiment, in operation 1320, the electronic device may transmit the avatar to the external electronic device in response to a movement amount of the electronic device being less than the predetermined second value.

For example, the predetermined second value may be a value for determining whether the movement of the electronic device is a movement for retransmitting the avatar. The user may want to transmit the avatar while stopping avatar transmission, and the predetermined second value may be a reference value for retransmitting the avatar when the amount of movement of the electronic device is less than the predetermined second value.

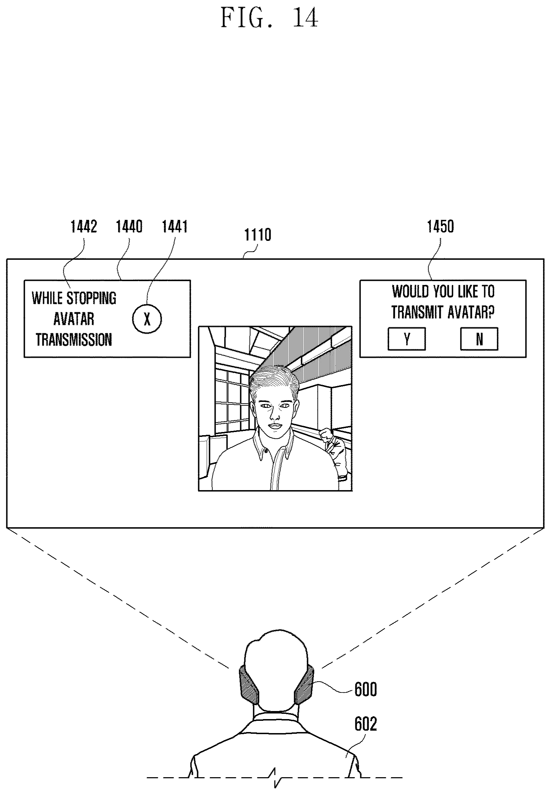

FIG. 14 is a diagram illustrating a screen displayed by an electronic device according to an embodiment of the disclosure.

The electronic device 600 may include at least one display. The electronic device 600 may display a screen for making a video call with the external electronic device 104 on at least one display.

According to an embodiment, the electronic device 600 may display a notification window 1440 notifying stopping avatar transmission on the display in response to stopping avatar transmission. The notification window 1440 may include an icon 1441 notifying stopping avatar transmission and/or a text 1442 notifying stopping avatar transmission.

According to an embodiment, the electronic device 600 may receive a user input for determining whether to transmit an avatar. The electronic device 600 may display a pop-up (or notification) 1450 for selecting whether to transmit an avatar on at least one display. The electronic device 600 may include an interface unit (e.g., touch input unit) for receiving a user input. The electronic device may identify whether to stop avatar transmission based on a user input (e.g., voice input, gesture input detectable by a camera, user movement acquired by a sensor) input to the interface unit.

According to an embodiment, a face-mounted electronic device may include a communication circuit. The electronic device may include a first camera for acquiring an image including at least a part of a user's face. The electronic device may include a second camera for acquiring a surrounding environment image thereof. The electronic device may include a memory storing at least one computer program including instructions. The electronic device may include at least one processor. The instructions, when executed individually or collectively by the at least one processor, may cause the electronic device to initiate (or perform) a communication connection for transmitting a voice and/or video to an external electronic device using the communication circuit. The instructions may cause the electronic device to create an avatar corresponding to the user based on an image including at least a part of the user's face and/or a changed surrounding environment image according to a movement of the electronic device. The instructions may cause the electronic device to transmit the avatar to the external electronic device. The instructions may cause the electronic device to identify an amount of movement of the electronic device based on a first image, which is the surrounding environment image at a time point of initiating communication connection and a changed surrounding environment image according to the movement of the electronic device. The instructions may cause the electronic device to identify whether an amount of movement of the electronic device exceeds the predetermined first value. The instructions may cause the electronic device to stop avatar transmission in response to an amount of movement of the electronic device exceeding the predetermined first value.

According to an embodiment, in a face-mounted electronic device, the instructions, when executed individually or collectively by the at least one processor, may cause the electronic device to store, in the memory, a second image, which is the surrounding environment image at a time point of stopping avatar transmission in the case of stopping avatar transmission.

According to an embodiment, in a face-mounted electronic device, the instructions, when executed individually or collectively by the at least one processor, may cause the electronic device to identify whether the electronic device is at the position where avatar transmission has stopped based on the second image and a changed surrounding environment image according to a movement of the electronic device while stopping avatar transmission. The instructions may cause the electronic device to transmit the avatar to the external electronic device in the case that the electronic device is at the position where avatar transmission has stopped.

According to an embodiment, in a face-mounted electronic device, the instructions, when executed individually or collectively by the at least one processor, may cause the electronic device to identify whether the amount of movement of the electronic device is less than the predetermined second value, based on a first image, which is a surrounding environment image at a time point of initiating communication connection, and a changed surrounding environment image according to a movement of the electronic device while stopping avatar transmission. The instructions may cause the electronic device to transmit the avatar to the external electronic device in response to the amount of movement of the electronic device being less than the predetermined second value.

According to an embodiment, in a face-mounted electronic device, characteristics of the avatar being displayed on the display may be determined based on the first image and the changed surrounding environment image according to a movement of the electronic device. In the face-mounted electronic device, characteristics of the avatar being displayed on the display may include at least one of a size, position, or angle of the avatar.

According to an embodiment, in a face-mounted electronic device, the instructions, when executed individually or collectively by the at least one processor, may cause the electronic device to receive a user input instructing to transmit the avatar while stopping avatar transmission. The instructions may cause the electronic device to transmit the avatar in response to receiving the user input instructing to transmit the avatar.

According to an embodiment, in a face-mounted electronic device, the instructions, when executed individually or collectively by the at least one processor, may cause the electronic device to identify a position of the electronic device based on the surrounding environment image acquired using the second camera while performing communication connection.

According to an embodiment, in a face-mounted electronic device, the instructions, when executed individually or collectively by the at least one processor, may cause the electronic device to determine a distance between the identified position of the electronic device and the position at which the electronic device initiated (or performed) a communication connection based on the first image as the amount of movement of the electronic device.

According to an embodiment, in a face-mounted electronic device, the instructions, when executed individually or collectively by the at least one processor, may cause the electronic device to identify whether an amount of rotation of the electronic device exceeds a predetermined value based on changes in the surrounding environment image. The instructions may cause the electronic device to stop avatar transmission in response to the amount of rotation of the electronic device exceeding the predetermined value.

According to an embodiment, in a face-mounted electronic device, the instructions, when executed individually or collectively by the at least one processor, may cause the electronic device to create a graphic object corresponding to a user's face in response to the amount of movement of the electronic device exceeding a predetermined value. The instructions may cause the electronic device to configure a position and/or size at which the graphic object is displayed on a display of the external electronic device to a predetermined value. The instructions may cause the electronic device to transmit the graphic object to the external electronic device.

According to an embodiment, a method of operating a face-mounted electronic device may include initiating a communication connection for transmitting a voice and/or image to an external electronic device using the communication circuit. The method of operating the face-mounted electronic device may include creating an avatar corresponding to the user based on an image including at least a part of the user's face and/or a changed surrounding environment image according to a movement of the electronic device. The method of operating the face-mounted electronic device may include transmitting the avatar to the external electronic device. The method of operating the face-mounted electronic device may include identifying an amount of movement of the electronic device based on a first image, which is a surrounding environment image at a time point of initiating communication connection, and a changed surrounding environment image according to a movement of the electronic device. The method of operating the face-mounted electronic device may include identifying whether the amount of movement of the electronic device exceeds the predetermined first value. The method of operating the face-mounted electronic device may include stopping avatar transmission in response to the amount of movement of the electronic device exceeding the predetermined first value.

According to an embodiment, the method of operating the face-mounted electronic device may include storing, in the memory, a second image, which is a surrounding environment image at a time point of stopping avatar transmission in the case of stopping avatar transmission.

According to an embodiment, the method of operating the face-mounted electronic device may include identifying whether the electronic device is at a position where avatar transmission has stopped based on the second image and a changed surrounding environment image according to a movement of the electronic device while stopping avatar transmission. The method of operating the face-mounted electronic device may include transmitting the avatar to an external electronic device, in the case that the electronic device is at a position where avatar transmission has stopped.

According to an embodiment, the method of operating the face-mounted electronic device may include identifying whether an amount of movement of the electronic device, which is identified based on a first image, which is a surrounding environment image at a time point of initiating the communication connection, and a changed surrounding environment image according to a movement of the electronic device, while stopping avatar transmission, is less than the predetermined second value. The method of operating the face-mounted electronic device may include transmitting the avatar to an external electronic device in response to the amount of movement of the electronic device being less than the predetermined second value.

According to an embodiment, in a method of operating the face-mounted electronic device, characteristics displayed being on the display may be determined based on the first image and a changed surrounding environment image according to a movement of the electronic device, and characteristics of the avatar being displayed on the display may include at least one of a size, a position, or an angle of the avatar.

According to an embodiment, the method of operating the face-mounted electronic device may include receiving a user input instructing to transmit the avatar while stopping avatar transmission. The method of operating the face-mounted electronic device may include transmitting the avatar in response to receiving the user input instructing to transmit the avatar.

According to an embodiment, the method of operating the face-mounted electronic device may include identifying a position of the electronic device based on a surrounding environment image acquired using the second camera while performing communication connection.

According to an embodiment, the method of operating the face-mounted electronic device may include determining a distance between the identified position of the electronic device and a position at which the electronic device initiated (or performed) a communication connection, which is identified based on the first image as the amount of movement of the electronic device.

According to an embodiment, the method of operating the face-mounted electronic device may include identifying whether a rotation amount of the electronic device exceeds a predetermined value based on a change in the surrounding environment image. The method of operating the face-mounted electronic device may include stopping avatar transmission in response to a rotation amount of the electronic device exceeding the predetermined value.

According to an embodiment, the method of operating the face-mounted electronic device may include creating a graphical object corresponding to a user's face in response to a movement amount of the electronic device exceeding a predetermined value. The method of operating the face-mounted electronic device may include configuring a position and/or a size at which the graphical object is displayed on a display of the external electronic device to a predetermined value. The method of operating the face-mounted electronic device may include transmitting the graphical object to the external electronic device.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., module or program) of the above-described elements may include a single entity or multiple entities, and some of the multiple entities may be separately disposed in another element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A face-mounted electronic device (500) comprising:
a communication circuit (530);
a first camera (540) configured to acquire images including at least a part of a user's face;
a second camera (550) configured to acquire images of a surrounding environment of the electronic device (500);
memory (520) storing at least one computer program comprising instructions; and
at least one processor (510),
wherein the instructions, when executed individually or collectively by the at least one processor (510), cause the electronic device (500) to:
initiate a communication connection for transmitting voice and/or video to an external electronic device (104) using the communication circuit (530);
generate an avatar corresponding to the user based on an image including at least a part of the user's face and/or an image of the surrounding environment;
transmit the avatar to the external electronic device (104);
determine an amount of movement of the electronic device (500) based on a first image and an image of the surrounding environment changed by the movement of the electronic device (500), wherein the first image is the image of the surrounding environment at a time of initiating the communication connection;
identify whether the amount of movement of the electronic device (500) exceeds a predetermined first value; and
in response to the amount of movement of the electronic device (500) exceeding the predetermined first value, stop the transmission of the avatar.

2. The face-mounted electronic device (500) of claim 1, wherein the instructions, when executed individually or collectively by the at least one processor (510), cause the electronic device (500) to
store a second image in the memory (520) when the transmission of the avatar is stopped, wherein the second image is the image of the surrounding environment at a time of stopping the transmission of the avatar.

3. The face-mounted electronic device (500) of claim 2, wherein the instructions, when executed individually or collectively by the at least one processor (510), cause the electronic device (500) to:
identify whether the electronic device (500) is located at the position where the transmission of the avatar was stopped, based on the second image and an image of the surrounding environment changed by movement of the electronic device (500) while the transmission of the avatar is stopped; and
if the electronic device (500) is located at the position where the transmission of the avatar was stopped, transmit the avatar to the external electronic device (104).

4. The face-mounted electronic device (500) of claim 1, wherein the instructions, when executed individually or collectively by the at least one processor (510), cause the electronic device (500) to:
identify whether the amount of movement of the electronic device (500) is less than a predetermined second value, based on the first image, which is the image of the surrounding environment at a time of initiating the communication connection, and an image of the surrounding environment changed by movement of the electronic device (500) while the transmission of the avatar is stopped; and
in response to the amount of movement of the electronic device (500) being less than the predetermined second value, transmit the avatar to the external electronic device (104).

5. The face-mounted electronic device (500) of claim 1, wherein the instructions, when executed individually or collectively by the at least one processor (510), cause the electronic device (500) to:
determine characteristics of the avatar being displayed based on the first image and the image of the surrounding environment changed by movement of the electronic device (500),
wherein the characteristics of the avatar being displayed include at least one of a size, position, or angle of the avatar.

6. The face-mounted electronic device (500) of claim 1, wherein the instructions, when executed individually or collectively by the at least one processor (510), cause the electronic device (500) to:
receive a user input instructing to transmit the avatar while the transmission of the avatar is stopped;
and transmit the avatar in response to receiving the user input instructing to transmit the avatar.

7. The face-mounted electronic device (500) of claim 1, wherein the instructions, when executed individually or collectively by the at least one processor (510), cause the electronic device (500) to
identify a position of the electronic device (500) based on the image of the surrounding environment acquired by the second camera (550) while performing the communication connection.

8. The face-mounted electronic device (500) of claim 7, wherein the instructions, when executed individually or collectively by the at least one processor (510), cause the electronic device (500) to
determine the amount of movement of the electronic device (500) as a distance between the position of the electronic device (500) checked based on the first image and the position of the electronic device (500) checked based on the second camera (550).

9. The face-mounted electronic device (500) of claim 1, wherein the instructions, when executed individually or collectively by the at least one processor (510), cause the electronic device (500) to:
identify whether an amount of rotation of the electronic device (500) exceeds a predetermined value based on changes in the image of the surrounding environment;
and in response to the amount of rotation of the electronic device (500) exceeding the predetermined value, stop the transmission of the avatar.

10. The face-mounted electronic device (500) of claim 1, wherein the instructions, when executed individually or collectively by the at least one processor (510), cause the electronic device (500) to:
generate a graphic object corresponding to a user's face in response to the amount of movement of the electronic device (500) exceeding a predetermined value;
set at least one of a position or size at which the graphic object is displayed on a display of the external electronic device (104) to a predefined value; and
transmit the graphic object to the external electronic device (104).

11. An operating method of a face-mounted electronic device (500), the method comprising:
initiating a communication connection for transmitting voice and/or video to an external electronic device (104) using a communication circuit (530);
generating an avatar corresponding to the user based on an image including at least a part of the user's face and/or an image of the surrounding environment;
transmitting the avatar to the external electronic device (104);
determining an amount of movement of the electronic device (500) based on a first image and an image of the surrounding environment changed by the movement of the electronic device (500), wherein the first image is the image of the surrounding environment at a time of initiating the communication connection;
identifying whether the amount of movement of the electronic device (500) exceeds a predetermined first value; and
in response to the amount of movement of the electronic device (500) exceeding the predetermined first value, stopping the transmission of the avatar.

12. The method of claim 11, the method comprising,
storing a second image in a memory (520) when the transmission of the avatar is stopped, wherein the second image is the image of the surrounding environment at a time of stopping the transmission of the avatar.

13. The method of claim 12, the method comprising,
identifying whether the electronic device (500) is located at the position where the transmission of the avatar was stopped, based on the second image and an image of the surrounding environment changed by movement of the electronic device (500) while the transmission of the avatar is stopped; and
if the electronic device (500) is located at the position where the transmission of the avatar was stopped, transmit the avatar to the external electronic device (104).

14. The method of claim 11, the method comprising,
identifying whether the amount of movement of the electronic device (500) is less than a predetermined second value, based on the first image, which is the image of the surrounding environment at a time of initiating the communication connection, and an image of the surrounding environment changed by movement of the electronic device (500) while the transmission of the avatar is stopped; and
in response to the amount of movement of the electronic device (500) being less than the predetermined second value, transmitting the avatar to the external electronic device (104).

15. The method of claim 11, the method comprising,
determine characteristics of the avatar being displayed based on the first image and the image of the surrounding environment changed by movement of the electronic device (500),
wherein the characteristics of the avatar being displayed include at least one of a size, position, or angle of the avatar.
